(19) Europäisches Patentamt
European Patent Office
Office européen des brevets

(11) EP 2 647 225 B1

(12) **EUROPEAN PATENT SPECIFICATION**

(45) Date of publication and mention of the grant of the patent:
**18.12.2019 Bulletin 2019/51**

(21) Application number: **11844664.0**

(22) Date of filing: **22.09.2011**

(51) Int Cl.:
***H04W 4/02*** *(2018.01)* ***H04W 4/06*** *(2009.01)*
***H04W 84/18*** *(2009.01)*

(86) International application number:
**PCT/FI2011/050814**

(87) International publication number:
**WO 2012/072861 (07.06.2012 Gazette 2012/23)**

# (54) METHOD AND APPARATUS FOR SELECTING DEVICES TO FORM A COMMUNITY

VERFAHREN UND VORRICHTUNG ZUR AUSWAHL VON VORRICHTUNGEN ZUR BILDUNG EINER GEMEINSCHAFT

PROCÉDÉ ET APPAREIL DE SÉLECTION DE DISPOSITIFS AFIN DE FORMER UNE COMMUNAUTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2010 US 956886**

(43) Date of publication of application:
**09.10.2013 Bulletin 2013/41**

(73) Proprietor: **Nokia Technologies Oy**
**02610 Espoo (FI)**

(72) Inventors:
- **TIRRONEN, Mikko**
**FI-00920 Helsinki (FI)**
- **GINZBOORG, Philip**
**FI-02360 Espoo (FI)**
- **VIRTANEN, Sami**
**FI-02180 Espoo (FI)**
- **LEPPÄNEN, Kari**
**FI-00870 Helsinki (FI)**
- **TURUNEN, Markku Tapio**
**FI-00660 Helsinki (FI)**

(74) Representative: **Browne, Robin Forsythe et al**
**Hepworth Browne**
**15 St Paul's Street**
**Leeds LS1 2JG (GB)**

(56) References cited:
**WO-A1-02/084898**
**WO-A1-2008/103945**
**WO-A2-2006/126138**
**WO-A2-2007/024380**
**US-A1- 2008 025 330**
**US-A1- 2008 113 674**
**US-A1- 2008 158 366**
**US-A1- 2009 201 850**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND

Service providers and device manufacturers (e.g., wireless, cellular, etc.) are continually challenged to deliver value and convenience to consumers by, for example, providing compelling network services. One area of development is the use of communication networks and devices to improve interaction between the devices and users of the devices. The devices may be able to detect each other and perform communication based on the detection within the same communication network. For example, the network formed between devices via Bluetooth or a local area network may enable the devices to detect each other and then to communicate with each other. Thus, the detected devices may form a community of detected devices, wherein the users using the devices within the community may perform certain functions (e.g. exchanging information among users in the community). However, the devices are generally detected within the communication network, and thus may result in detection of devices that are more than desired devices. Therefore, users may prefer selective detecting of the devices and forming the community for communication between the devices based on their preferences. Accordingly, service providers and device manufacturers face significant technical challenges in providing users with improved experience in communicating with surrounding devices.

US2009201850 describes a system and method for constructing a proximity-based ad hoc network among a plurality of sensors and for using such a network to perform location tracking. The system and method use time-coded data received from each of the sensors to determine a current proximity of each of the sensors to one or more beacons. Then, by leveraging information relating to the effective transmission ranges of the beacons, the system and method determines the relative location of each of the plurality of sensors with respect to other sensors within the plurality of sensors. Where actual (as opposed to relative) location information is available for a particular sensor, it can be used to generate or augment location information associated with other sensors known to be spatially and temporally proximate to the particular sensor. The current location information for each of the sensors is then used in providing location-based services.

US2008025330 relates to a method and system for dynamic information exchange on mesh network devices. A mesh network device with integrated features creates an N-way mesh network with a full mesh network topology or a partial mesh network or an ad-hoc network topology. The mesh network device is able to dynamically exchange information with other mesh network devices using stored profiles (e.g., personal data, advertisements, instant coupons, location-aware information, etc.) via a mesh network or partial mesh network or ad-hoc network.

SOME EXAMPLE EMBODIMENTS

Therefore, there is a need for an approach for selecting devices to form a community of the devices.

According to a first aspect of the present invention there is provided a method in accordance with claim. In a second aspect of the invention there is provided an apparatus implementing the method of the first aspect, the apparatus according to claim 12. In another aspect of the invention there is provided a computer-readable storage medium according to claim 13.

In one embodiment, a method comprises determining one or more candidate devices within proximity of at least one device. The method also comprises determining to initiate at least one synchronized capture of sensor data by the at least one device and at least one of the one or more candidate devices. The method further comprises determining to form the community based, at least in part, on the at least one synchronized capture.

According to another embodiment, an apparatus comprises at least one processor, and at least one memory including computer program code, the at least one memory and the computer program code configured to, with the at least one processor, cause, at least in part, the apparatus to determine one or more candidate devices within proximity of at least one device. The apparatus is also caused to determine to initiate at least one synchronized capture of sensor data by the at least one device and at least one of the one or more candidate devices. The apparatus is further caused to determine to form the community based, at least in part, on the at least one synchronized capture.

According to another embodiment, a computer-readable storage medium carries one or more sequences of one or more instructions which, when executed by one or more processors, cause, at least in part, an apparatus to determine one or more candidate devices within proximity of at least one device. The apparatus is also caused to determine to initiate at least one synchronized capture of sensor data by the at least one device and at least one of the one or more candidate devices. The apparatus is further caused to determine to form the community based, at least in part, on the at least one synchronized capture.

According to another embodiment, an apparatus comprises means for determining one or more candidate devices within proximity of at least one device. The apparatus also comprises means for determining to initiate at least one synchronized capture of sensor data by the at least one device and at least one of the one or more candidate devices. The apparatus further comprises means for determining to form the community based, at least in part, on the at least one synchronized capture.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

## BRIEF DESCRIPTION OF THE DRAWINGS

The embodiments of the invention are illustrated by way of example, and not by way of limitation, in the figures of the accompanying drawings:

FIG. 1 is a diagram of a system capable of selecting devices to form a community, according to one embodiment;
FIGs. 2A-2B show wireless apparatuses connected in a mesh network, according to one embodiment;
FIG. 3 is a diagram of the components of the network manager, according to one embodiment;
FIG. 4 is a flowchart of a process for selecting devices to form a community, according to one embodiment;
FIG. 5 is a flowchart of a process for creating a community based on the synchronous capture, according to one embodiment;
FIGs. 6A-6D are diagrams of example processes for selecting devices for creating a community, according to various embodiments;
FIGs. 7A-7B are diagrams of user interfaces utilized in the processes of FIG. 4, according to various embodiments;
FIG. 8 is a diagram of hardware that can be used to implement an embodiment of the invention;
FIG. 9 is a diagram of a chip set that can be used to implement an embodiment of the invention; and
FIG. 10 is a diagram of a mobile terminal (e.g., handset) that can be used to implement an embodiment of the invention.

## DESCRIPTION OF SOME EMBODIMENTS

Examples of a method, apparatus, and computer program for selecting devices to form a community are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

FIG. 1 is a diagram of a system capable of selecting devices to form a community, according to one embodiment. As discussed previously, it may be desirable to selectively determine devices to communicate because a user of the device may not want to communicate with all available devices on the network. Generally, a user may feel more comfortable to exchange information with other users who are within proximity with the user or share something in common, than with complete strangers. Some devices have limitations in a location range within which the devices can communicate, and thus only devices within some proximity within the range may be able to communicate. For example, in an environment where devices or nodes are used for communication via a mesh network like an ad-hoc network, then information can be exchanged from a device to another device via one or more intermediate devices. However, limiting the communicating devices based on the range may result in numerous devices, and thus may not be sufficiently selective. Further, if the devices are selected randomly or if the devices are selected without set criteria, then a community of numerous and/or random devices may be too overwhelming to the user or may not provide much meaning to the user. Therefore, the devices need to be selected for communication such that a user may have sufficient familiarity and/or something in common, with the users of the selected devices and/or some selective criteria. Especially when the users of the devices are in a close proximity (e.g. in the same meeting room or cafés), these users may be able to see each other and may have many things in common for being in the same environment. Therefore, automatic selection of the devices to provide improved experience for the user to communicate with users of other devices and additionally form a community of users is desired.

To address this problem, a system 100 of FIG. 1 introduces the capability to select devices used by users so as to form a community of users using the devices. In one embodiment, the system 100 determines candidate devices within proximity of a device (e.g. user device). For instance, a device may detect other devices and set the detected devices as candidate devices, wherein the candidate devices are candidates for forming a community. In one embodiment, the determination of the candidate devices may also be based on this capability of the devices to communicate (e.g. devices that are not capable of communicating with the device are not considered as candidate devices). The system 100 determines to initiate a synchronized capture of sensor data by the device and candidate devices. The sensor data may include data captured via an audio and/or video recording device, brightness sensor, speed sensor, etc. By way of example, the initiation of the synchronized capture may cause the device and the candidate devices to capture data from sensors connected to the device and the candidate devices respectively. Then, the system 100 determines to form the community based on the synchronized capture. For example, if the sensor data captured via the device during the synchronized capture correspond sufficiently with the sensor data captured via the candidate devices during the synchronized capture, then the candidate devices may be used to form a community with the device. The comparison of the sensor data captured via various devices during the same synchronized capture may provide information as to how much common characteristics the devices share and/or how familiar the users of the devices are expected to be with each other based on this sensor data. Therefore, this method can select the devices to form a community for the user using the device based on proximity as well as other criteria.

In one sample use case, a user may use the user device to determine the candidate devices that are candidates for devices for a community of the devices. The candidate devices may be determined by measurement of the communication signal strength between the user device and other devices. For example, if the devices can communicate via a wireless network such as a wireless local area network (WLAN) and/or Bluetooth, and the devices that have strong signal strength to communicate with the user device may be set as candidate devices. The selection of the candidate devices may be also based on the network topology estimation, and thus may be based on the estimated locations of the devices. Once the candidate devices are determined, the user device may trigger a synchronous timer that works as a trigger to initiate capture of data at the user device as well as at the candidate devices. The synchronous timer may be a service provided by a network to which the user device and the candidate devices are connected. For example, the user device and the candidate devices may be connected to the same mesh network that provides the synchronous timer service such that events may be triggered at the same time at the devices connected to the mesh network. The synchronous timer may be based on a Timing Synchronization Function (TSF) of a wireless local area network (WLAN). Thus, the data may be captured at multiple devices at the same time according to the synchronous timer triggered by the user device. In one example of capturing the data, the devices may record audio of the environment surrounding the respective devices. Further, when the synchronous timer is triggered, a time out event is generated at the user device as well as at all candidate devices. The time out event is used for initiating capture of the sensor data in a synchronous manner. The captured data (e.g. audio recording) is then processed to generate a fingerprint data at each of the user device and the candidate devices. Therefore, each device generates fingerprint data based on the respective captured data. Then, the fingerprint data is broadcasted by the user device and the candidate devices. For example, if the fingerprint data at the user device is broadcasted to the candidate devices, the fingerprint data of the user device may be compared with the fingerprint data of the candidate devices. The fingerprint data may be sent as a broadcast via a mesh network, for example, especially if the fingerprint data is a small stand-alone packet, instead of sending it via a point-to-point transmission or media stream. If the fingerprint data of the user device sufficiently matches with the fingerprint data of one of the candidate devices, that candidate device is determined as a device for forming a community with the user device.

As shown in FIG. 1, the system 100 comprises user equipments (UEs) 101a-101n having connectivity to one another via wireless nodes 103a-103n. Although not shown, the UEs 101a-101n may have connectivity to one another via a communication network. The UE 101 includes a wireless node 103 or is connected to the wireless node 103, which may be used to wirelessly communicate with other devices and/or to connect to a communication network. The UE 101 may also include a network manager 105 that manages various network-related tasks. For example, the UE 101 may communicate with the wireless node 103 to determine the candidate devices within the proximity of the user device. As another example, the network manager 105 may also manage capturing of sensor data and forming of a community of devices, based on various criteria including conditions involving the captured sensor data. Further, the network manager 105 may also initiate synchronized capture of sensor data by the user device and the candidate devices. By way of example, if the UE 101a is a user device, and the UE 101b is a candidate device, the network manager 105a may initiate the synchronized capture at the UE 101a and the UE 101b such that the network manager 105a will capture the sensor data at the UE 101a and the network manager 105b will capture the sensor data at the UE 101b in a synchronized manner. Further, the network manager 105 may form the community based on the synchronized capture. The sensor data may be captured via the sensor 107 connected to the UE 101 or included in the UE 101. The sensor 107 may include various types of components that can acquire information, especially information surrounding the UE 101. Thus, the sensor data may relate to one or more characteristics, one or more contexts, or a combination thereof of respective environments of the device, the one or more candidate devices, or a combination thereof. Examples of the sensor 107 may include an audio sensor (e.g. an audio recording device), a video capture device, a camera, a brightness sensor, a location sensor (e.g. a global positioning system (GPS) device), a speed sensor, etc. The UE 101 may also be connected to the data storage 109 to store data including the captured sensor data, a list of candidate devices, a list of the devices for forming the community, etc.

This process may be performed multiple times. The results from the multiple synchronized captures may be examined to determine the devices for the community. Using the data from the multiple captures may provide more accurate results than relying on data from a single capture. Further, in one embodiment, once the community is formed, a list of the devices in the community may be stored in the user device. The devices in the list may be considered as trusted devices such that, whenever the devices in the list are detected by the user device, they can be automatically placed in the user device's community. In this embodiment, once a device is added to the community, the device stays in the community, unless the user decides to exclude such device from the community. Thus, according to this embodiment, the device added to the community has a permanent status as a member of the community and thus may stay in this community even if the device is moved far from the user device. In another embodiment, the community of devices is less permanent, and thus once a device is outside the proximity of the user device, such device is no longer considered a part of the community.

In one embodiment, the system 100 may determine a network topology. Then, the determination of the candidate devices may also be based on the network topology. By way of example, topology estimation may be used to select the candidate devices. For instance, if the UE 101b belongs to the same group as the UE 101a based on the topology estimation, then the UE 101b may be considered as a candidate device for the UE 101a's community. Detailed explanation of one example of network topology estimation is presented later in FIGs. 2A and 2B. In another embodiment, the system 100 may determine any change in the network topology and update the community based on the change. For example, if the UE 101a determines that the UE 101b is no longer within proximity of the UE 101a (e.g. the user carrying the UE 101b left the area of the UE 101a), then the community may be updated based on this change, by removing the UE 101b from the community.

Also, in one embodiment, the system 100 determines a start time and/or a stop time of the synchronized capture. In this case, the synchronized capture is based on the start time and/or the stop time. For example, the start time and the stop time may specify the time to start the synchronized capture and the time to stop the synchronized capture, respectively, in the UEs 101a-101n, assuming that the UEs 101b-101n are candidate devices for the UE 101a's community. In an example where an audio recording is used for the data capture, and the start time is 12:00pm and the stop time is 12:01pm, then the UEs 101a-101n records audio data from 12:00pm to 12:01pm. Thus, this feature enables capture of the data at the UEs 101a-101n at the same time, in a synchronous manner. In addition, because the data is captured at the same time in a synchronized manner throughout the UEs 101a-101n, the data may be captured for only a short period of time to capture sufficient data that correspond with the UEs 101a-101n. Further, in another embodiment, a timer may trigger the synchronous capture by the user device and the candidate devices. The timer may be a synchronous timer (ST), which is a service provided for the user device and the candidate devices in a mesh network. The mesh network may provide the ST service to the devices connected to the mesh network. Then, the user device and the candidate devices may need to be registered with the service to be able to use the synchronous timer. Also, a timing synchronization function (TSF) may be used to synchronize the capture at the UEs 101a-101n. In one example, the user device may need to be registered with a synchronized timer service in the mesh network to be able to generate such signal.

In one embodiment, the system 100 causes generation of a signal by the user device and/or the candidate devices, wherein the synchronized capture is based on the generated signal. By way of example, one of the devices may generate a signal such as voice pulses which can be captured by other devices as the sensor data. In one example, the time of capture of the signal at each device may be recorded, and then may be used as information to determine whether the device should be in the user device's community. For instance, the user device may generate an artificial audio signal, and other candidate devices may record the time the candidate devices heard the audio signal. If the artificial audio signal is generated at 1 second and 2.5 seconds, and the candidate device captured the artificial audio signal at 1 second and 2.5 seconds, then the system 100 may determine that the candidate device can be included in the user device's community because the candidate device captured the artificial audio signal at the time it was generated.

Further, in one embodiment, the system 100 determines contexts associated with the user device and/or the candidate device, and determine sensors associated with the user device and/or the candidate devices based on the contexts. Then, the synchronized capture is performed based on these sensors that are determined based on the contexts. In other words, different sensors may be used for the synchronized capture depending on the contexts. For example, if the context shows that the user of the UE 101a is hiking, then capturing data from a location sensor (e.g. a GPS device) may be more feasible than capturing data from other sensors, because there is a high chance that the location sensor may be already be turned on to track where the user is while the user is hiking. On the contrary, if the context shows that the user is in a coffee shop, the location sensor is less likely to be turned on and the user is likely to be stationary. Thus, in this case, the audio sensor may be used to capture synchronized audio recording of the surroundings.

Further, in another embodiment, the system 100 may monitor for an ambient signal at the user device and/or the candidate devices. Then, the synchronized capture may be based on the ambient signal. By way of example, the user device may detect a certain ambient signal level such as an ambient noise level, and then initiate the synchronized capture once the user device detects the ambient signal. Especially if the sensor data to be captured is an audio data, and the surrounding environment is quiet, the audio data captured in this quiet environment may not have sufficient information. Therefore, the system 100 may monitor the ambient signal level, and if the ambient signal level is sufficiently high, then the synchronized capture of the sensor data is initiated. For example, an audio sensor such as a microphone in the user device may monitor the ambient noise level, and the synchronized recording of the audio by the user device and the candidate devices are initiated if the audio sensor in the user device determines the ambient noise level is sufficiently high. A voice activity detector (VAD) may be implemented in this example to determine whether there is sufficient activity at the microphone to initiate the synchronized capture.

In one embodiment, the system 100 determines fingerprint information based on the synchronized capture of the data, and the community is formed based on the fingerprint information. One example of the fingerprint information is a fingerprint data generated by processing all or a portion of the data acquired via the synchronized capture. This fingerprint data based on the data captured at the user device may be compared with fingerprint data of candidate devices. If there is a sufficient match between the fingerprint data of the user device and the fingerprint data of a candidate device, then the candidate device may be allowed to join the community. This may be because a match in the fingerprint information may suggest that the devices are in close proximity or share sufficiently similar environments. Further, in another embodiment, the system 100 may generate a community key and/or a community identifier based on the synchronized capture. For example, a common key for the community may be generated directly from the captured data or fingerprint information associated with the captured data. Further, the community identifier may also be generated directly from the captured data or fingerprint information associated with the captured data. Then, the community key and/or the community identifier may be used to communicate among the devices in the same community. In one embodiment, the system 100 may encrypt communication within the community based on the community key and/or the community identifier. For example, the community identifier may identify that the devices are in the same community, such that the communication may be sent only to the devices in the same community. Also, the community key or a key derived from the community key may be used to encrypt the communication between the devices in the same community. To form the community, according to one embodiment, the fingerprint information from the user device may be sent to the candidate devices for comparison. Then, the candidate devices having the fingerprint information that sufficiently matches the user device's fingerprint information are invited to join the community of the user device. According to another embodiment, instead of sending the fingerprint information of the user device to the candidate devices, the fingerprint information of the user device and the candidate devices are used to generate the community key and/or the community identifier. Then, the devices that have the same or similar community key and/or community identifier are placed in the same community.

Further, in one embodiment, the community key and/or the community identifier may be stored for the user device and the candidate devices. Then, even if the user device and the candidate devices leave the same area, they can still retain the same community key and/or the community identifier. Then, in one example, the candidate devices that retain a matching community key and/or the community identifier as the user device may always be considered in the user device's community, even if the candidate devices are far from the user device. In another example, the candidate devices that retain a matching community key and/or the community identifier from a previous meeting may not automatically qualify as members of the community, but rather automatically qualify as candidate devices. Then, the user device may capture the sensor data at the user device and the candidate devices to form a community at a present meeting.

Therefore, an advantage of this approach is that by providing an easy way to selectively determine the devices to join a community of the user device based on proximity and other criteria. For example, the user device can determine candidate devices based on proximity and then additionally examine sensor data captured synchronously across the user device and the candidate devices in order to determine whether to include the candidate device in the community. Relying on the synchronously captured sensor data provides additional criteria in more accurate determination of the devices that are in the same space as the user device. Further, because this approach enables the user to install content items in the user device without much effort according to the user's preferences, the user has more incentive to customize the device. Further, because this approach involves the devices in determining the devices for the community, a burden on a server to perform the relevant analysis is reduced. Therefore, means for selecting devices to form a community is anticipated.

By way of example, if the UEs 101a-101n are connected via a communication network (not shown), then the communication network includes one or more networks such as a data network (not shown), a wireless network (not shown), a telephony network (not shown), or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

By way of example, the UEs 101a-101n communicate with one another using well known, new or still developing protocols. In this context, a protocol includes a set of rules defining how the network nodes within the communication network (not shown) interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application headers (layer 5, layer 6 and layer 7) as defined by the OSI Reference Model.

FIGs. 2A and 2B are examples of a mesh network which wireless apparatuses such as the UEs 101a-101n may rely in order to communicate with one another within the mesh network. FIG. 2A depicts an example embodiment of a mesh network 200 with wireless apparatuses. The wireless apparatuses are for example wireless nodes communicating in the wireless mesh network 200 like for example in an ad-hoc mesh network. The UEs 101a-101n may be capable of forming this mesh network 200 using the wireless nodes 103a-103n in the respective UEs 101a-101n. For the purpose of simplicity, only wireless nodes are shown in FIG. 2A (as well as FIG. 2B), instead of showing all of the components of the user equipments. Wireless links between the wireless nodes may be based on a short-range communication protocol like for example Bluetooth, Wireless USB (Universal Serial Bus), wireless local area network (WLAN) or any other suitable ad-hoc radio mesh protocols that enables direct communication between devices in a connectionless fashion and allows to carry awareness information. Awareness information refers to any information and/or context about a local environment as well as the users and communication devices within the local environment. By way of example, awareness information may be used to support applications for creating social networks, determining presence, determining contexts associated with a device, advertising and/or searching for information.

An apparatus like for example wireless node 201 is configured to communicate awareness information with his neighbor nodes 211, 213 and 215 in a connectionless fashion. Connectionless here refers for example to an ability of node 201 to transmit messages to the neighbor nodes without any prior control signaling for connection setup between any pair of wireless nodes. The neighbor nodes are in the coverage area 250 of the wireless node 201. Wireless node 201 may direct communicate with its neighbor or remote nodes 111, 113 and 115. Wireless node 201 may identify its neighbor nodes by listening on the channel. In the communication area of wireless node 211 are wireless nodes 201, 213, 221 and 223. Wireless nodes 221 and 223 are out of the communication range of wireless mode 201. Consequently, wireless node 201 is not able to communicate and identify the availability of wireless node 221 and 223. In the communication area of wireless node 213 are wireless nodes 201, 211, 223 and 225. Wireless nodes 223 and 225 are out of the communication range of wireless mode 201. Wireless node 201 cannot communicate directly with wireless nodes 223 and 225. Thus, apparatus 201 is not able to identify the availability of wireless node 223 and 225. Thus, wireless node 201 may correspond to the wireless node of the user device, and his neighbor wireless nodes 211, 213 and 215 within the coverage area 250 of the wireless node 201 may be considered as candidate devices.

FIG. 2B depicts an example embodiment of a mesh network with wireless apparatuses wherein two additional apparatuses are presented wherein one or both may have a real geographical position. In FIG. 2B apparatuses like for example wireless nodes 201 to 225 are similar to those in FIG. 2A. The additional apparatuses are wireless nodes 231 and 233. Each of the wireless nodes 231, 233 may comprises a real or fixed or known geographical position that may be known a priori. For example the real geographical position may be predetermined or obtained from global positing system (GPS) data. The other wireless nodes of FIG. 2B are not able to identify their own positions as they may be located indoor or are not configured to receive GPS data.

A wireless apparatus for example a wireless node or device may transmit one or more periodic messages that comprise some identification information like a unique address or a media access control address (MAC address / identification) or a temporary identification of the transmitting wireless node. In some short-range communication protocols the periodic messages are known as beacons. A wireless node like for example wireless nodes or terminals may identify the availability of one or more other remote wireless nodes in communication range by listening to the channel and with the identified periodic messages the wireless apparatus is configured to measure the received signal strength indicator (RSSI) towards each of the one or more remote nodes identified by the identification information. The identified RSSI value may be used to determine the distance information towards a remote node based on EQUATION 1. The distance representation may be in any units. In an embodiment the distance representation may be in meters. In another embodiment the distance representation may be defined in predefined distance categories.

$$Dist = \sqrt{\frac{1}{10^{3.9+\frac{RSSI}{10}}}} \qquad \text{(EQUATION 1)}$$

In another embodiment the distance information may be determined from phase offset estimation. In further embodiments a wireless node may transmit a request and all remote nodes that may identify the request may response with a response message with similar content as the periodic message. The response messages could be used for a determination of distance information based methods like time of flight, time of arrival, angle of arrival or phase difference or distance class information.

The wireless node may distribute all its identified distance information towards remote apparatuses together with the respective identification information to other apparatuses. The distribution may be done by transmission of a periodical message or by responding to a received request for a distance information message. The distance information may be used to determine a topology map. A topology map shows relative positions of surrounding wireless nodes with respect to the node that generates the topology map. For example if wireless node 201 estimates a location map or topology map of the wireless node around it, wireless node 201 collects all the distance information from the wireless nodes in its communication range. In this example from nodes 211, 213 and 215. Beside that it collects distributed distance information or distance measurement reports from remote wireless nodes 211, 213. The distributed distance information comprises identification and distance information of peer wireless nodes of the remote wireless node. In an example distance measurement report distributed by wireless node 211 would include distance information and related wireless identification of nodes 201, 213, 221 and 223. Not all of the wireless nodes are in the communication range of wireless node 201. In this example wireless nodes 221 and 223 are out of wireless node 201 communication range.

In an embodiment wireless nodes that are moving rapidly with respect to others that could be determined from a distance measurement history stored in a wireless node are not reported to other wireless nodes. Consequently, they are excluded from the determination of the topology map. In another embodiment the number of distance measurements may be limited by a threshold, for example only distance measurements below a distance threshold (for example available in a restricted area) are distributed to reduce the traffic in the mesh network.

After wireless node 201 collects all the distance information the topology map around wireless apparatus may be determined by a minimization of a cost function. There are more measurements than unknown parameter in the scenario. For example, in case of ten nodes there are 90 measurements of distance or distance estimates available which correspond to 45 pairs of the distance information and the distance of each pair is measured from both ends. Only 18 unknown parameters need to be determined. In this scenario they are x, y coordinates of the nine other wireless nodes with respect to the position of the wireless node 201. Because of this, possible noise in the distance estimates may be suppressed to some extent by the minimization.

In the following embodiment local topology estimation is presented by ranging distance measurements between nodes. The following EQUATION 2 maybe used to determine the *f(x, y)* cost function for two dimensions.

$$f(x,y) = \min_{x_i, y_i} \sum_{j=2}^{N} \sum_{i=1}^{N} \left[ (x_j - x_i)^2 + (y_j - y_i)^2 - d_{j,i}^2 \right]^2 S_{j,i} \qquad \text{(EQUATION 2)}$$

$d_{j,i}$ represents the distance information, corresponding to estimated distance between wireless nodes *j* and *i*.
N represents the number of nodes identified or reported to wireless node
$S_{j,i}$ is used to identify if wireless nodes *j* and *i* are in direct communication. It is equal to 1 if *j* and *i* can hear each other, otherwise 0. It is also 0 if *j*=*i* are the same
x, y represents related coordinates

EQUATION 3 and 4 are used for partial derivates of EQUATION 2 with respect to x's and y's (j=1,..,N). EQUATION 3 and 4 are gradient descent optimizations. Not all N positions may be chosen at a time instead only one position may be chosen at a time during the optimization.

$$\Delta x_j = sign\left[\frac{\partial f(x,y)}{\partial x_j}\right] = sign\left[\sum_{i=1}^{N} 4\left[(x_j - x_i)^2 + (y_j - y_i)^2 - d_{j,i}^2\right] S_{j,i}(x_j - x_i)\right] \qquad \text{(EQUATION 3)}$$

$$\Delta y_j = sign\left[\frac{\partial f(x,y)}{\partial y_j}\right] = sign\left[\sum_{i=1}^{N} 4\left[(x_j - x_i)^2 + (y_j - y_i)^2 - d_{j,i}^2\right] S_{j,i}(y_j - y_i)\right] \qquad \text{(EQUATION 4)}$$

Sign() represents a sign operation. The sign operation controls the step size and may improve the stability.
$\Delta x_j$ represents the changes to x coordinates, j=1,...,N
$\Delta y_j$ represents the changes to y coordinates, j=1,...,N

To avoid local minima one summand at time may be used. EQUATION 5 and 6 represents the optimized equation. One pair of j and i may be chosen at a time and only those may be updated, not all i,j=1,...,N. Pair j and i may be chosen randomly. This adds some 'noise' to optimization and may help to avoid local minima.

$$\Delta x_j = sign\left[\frac{\partial f(x,y)}{\partial x_j}\right] = sign\left[\left[(x_j - x_i)^2 + (y_j - y_i)^2 - d_{j,i}^2\right] S_{j,i}(x_j - x_i)\right] \qquad \text{(EQUATION 5)}$$

$$\Delta y_j = sign\left[\frac{\partial f(x,y)}{\partial x_j}\right] = sign\left[\left[(x_j - x_i)^2 + (y_j - y_i)^2 - d_{j,i}^2\right] S_{j,i}(y_j - y_i)\right] \qquad \text{(EQUATION 6)}$$

$\Delta x_j$ represents a change to coordinate $x_j$

$\Delta y_j$ represents a change to coordinate $y_j$

x, y represents related coordinates

$d_{j,i}$ represents the distance information, corresponding to estimated distance between wireless nodes *j* and *i.*

$S_{j,i}$ is used to identify if wireless nodes *j* and *i* are in direct communication.

For the location map determination following steps may be used:

1. t=0; $N_{steps}$=Number of iterations. Parameter $\alpha$ is some small value.
2. t=t+1;
3. Choose j and i randomly.
4. Update $x_j(t) = x_j(t\text{-}1) + \alpha\Delta x_j(t)$, $y_j(t) = y_j(t\text{-}1) + \alpha\Delta y_j(t)$
5. If t>$N_{steps}$, end, else goto 2.

Using this estimation, the user device (e.g. the UE 101a) may be able to determine candidate devices based on their distance from the user device. For example, if a device is within a threshold distance from the user device in the mesh network, then such device may be a candidate device for the user device's community. Further, this estimation enables creation of a topology map that shows relative positions of surrounding wireless nodes with respect to the node of the user device. Then, the topology map may be used to determine candidate devices based on the distances shown on the topology map.

FIG. 3 is a diagram of the components of the network manager 105, according to one embodiment. By way of example, the network manager 105 includes one or more components for selecting devices to form a community. It is contemplated that the functions of these components may be combined in one or more components or performed by other components of equivalent functionality. In this embodiment, the network manager 105 includes a control module 301, an acquisition module 303, an analysis module 305, a presentation module 307 and a communication module 309. The control module 301 oversees tasks, including tasks performed by the acquisition module 303, the analysis module 305, the presentation module 307 and the communication module 309. The acquisition module 303 may manage acquisition of data via the sensor 107 as well as from other components (not shown) of the UE 101. The acquisition module 303 may also initiate a synchronized capture of sensor data by the user device (e.g. UE 101a) and the candidate devices (e.g. some or all of the UEs 101b-101n). The acquisition module 303 may manage inputs entered by the user on the UE 101. The analysis module 305 performs various analysis, including analysis of the data acquired via the acquisition module. The analysis module 305 may also perform analysis to determine the candidate devices within proximity of the user device, and analysis related to forming a community based on the synchronized capture of the sensor data. The presentation module 307 is used to present information on a display screen of the UE 101. The presentation module 307 may utilize a user interface of the UE 101 to display such information. The communication module 309 manages various types of communication within the UE 101, as well as with another device. The communication module 309 may use the wireless node 103 to communicate with other devices and/or other wireless nodes.

In one embodiment, the analysis module 305 determines the network topology, and determines the candidate devices based on the network topology. For example, the analysis module 305 may estimate the distances between the UEs 101a-101n to estimate the network topology. By way of example, the devices that are within a predetermined distance from the user device (e.g. UE 101a) may be determined as candidate devices. The predetermined distance may be set by the user or may be automatically set as a default. Further, this network topology may change. For example, if at least one of the UEs 101a-101n moves, then the network topology may change. The analysis module 305 also determines the change in the network topology, and updates the community based on the change of the network topology. For instance, if the UE 101b is moved far from the user device (e.g. UE 101a) and thus is outside the proximity of the user device, then the analysis module 305 may update the community to remove the UE 101b from the community of the user device. In another example, the analysis module 305 may determine the candidate devices based on signal strength for communication between the user device and other devices. If the signal strength is strong, then the device may be a candidate device for the user device. In another embodiment, the community status of a device may be more permanent. For example, once the device is included in the community, such device is considered as a device in the community, even if the device is later moved far from the user device or has no longer have strong signal strength to communicate with the user device. Thus, this device has a permanent status as a member of the community.

In one embodiment, the acquisition module 303 may determine a start time and/or a stop time of the synchronized capture of the sensor data. Then, the synchronize capture is performed based on the start time and/or the stop time. For example, the acquisition module 303 may set a start time and a stop time, and then initiate the synchronized capture of the sensor data by the user device (e.g. UE 101a) and the candidate devices at the start tie, and stop this synchronized capture by the user device (e.g. UE 101a) and the candidate devices at the stop time. Because the sensor data is captured in a synchronized manner, the user device and the candidate devices acquire the sensor data with the same duration at the same time. Further, in another embodiment, a timer may be generated such that the capture of the sensor data may be properly synchronized. For example, a synchronous timer (ST) may be generated by the user device and/or the candidate devices, and the ST may trigger and stop the synchronous capture by the user device and the candidate devices. Also, a timing synchronization function (TSF) may be used to synchronize the UEs 101a-101n.

Also, in one embodiment, the acquisition module 303 may determine contexts associated with the user device and/or the candidate devices, and determine sensors associated with the user device and/or the candidate devices based on the contexts. Then, the acquisition module 303 performs the synchronized capture of the sensor data by the user device and the candidate devices based on the sensors that are determined based on the contexts. In this embodiment, certain contexts may trigger use of certain sensors to capture the sensor data. For example, if the context of the user device indicates that the user is jogging, the acquisition module 303 may initiate synchronized capture of sensor data by the user device and the candidate devices via the GPS devices of the user device and the candidate devices respectively. As another example, if the context of the user device indicates that the user is in a meeting room, then the acquisition module 303 may use audio sensors of the user device and the candidate devices to perform synchronized capture of the audio data (sensor data).

In one embodiment, the acquisition module 303 causes generation of a signal by the user device and/or the candidate devices, wherein the synchronized capture is based on this signal. This signal may be generated, and then the user device and the candidate devices may capture the generated signal synchronously. For example, the user device may first start a synchronous timeout (ST) event at the user device and the candidate devices, and then generate an artificial audio signal at one or more intervals, wherein the intervals may be generated in a random manner. For example, at the user device, the first audio signal may be generated at 1 second and the second audio signal may be generated at 2.5 seconds after the ST event is started. The candidate devices records the times of acquisition for the first audio signal and the second audio signal after the ST event. If the candidate device records the time for the first audio signal to be 1 second and the time for the second audio signal to be 2.5 seconds after the ST event, then this candidate is in the same space, and thus is placed in the user device's community. In another embodiment, the user device and the candidate devices may capture the time the signal is captured. If the signal is captured at the user device at 0 second, and is captured at three candidate devices at 0.1 seconds, 0.2 seconds and 2.3 seconds respectively, only the candidate devices that captured the signal at 0.1 seconds and 0.2 seconds may be included in the community. This is because candidate devices in a similar environment or close proximity as the user device would capture the signal more quickly. The threshold time for determining whether the candidate devices capture the signal quickly enough to be included in the community may be set by a user or automatically based on certain conditions.

Further, in one embodiment, the acquisition module 303 monitors for an ambient signal at the user device and/or the candidate devices. In this case, the synchronized capture is based on the ambient signal. The acquisition module 303 may determine whether an ambient signal is present or whether the level of the ambient signal is high enough. Thus, the acquisition module 303 may not initiate a synchronized capture of the sensor data until the ambient signal is present or the level of the ambient signal is sufficiently high. For example, if the acquisition module 303 determines that the surrounding is quiet and thus has a low or little ambient noise, then the acquisition module 303 may not initiate the synchronized capture of the audio sensor data because the ambient noise is not enough to provide useful information when captured as the audio sensor data. On the contrary, if the surrounding is sufficiently loud, the acquisition module 303 may determine that the ambient noise is high enough, and then initiate the synchronized capture of the audio sensor data.

In one embodiment, the analysis module 305 may determine fingerprint information based on the synchronized capture, and form the community based on the fingerprint information. For example, the analysis module 305 may process the captured sensor data to generate the fingerprint information. The fingerprint information is generated for each of the user device and the candidate devices based on their respective captured sensor data. If there is sufficient match between the fingerprint information of the user device and the fingerprint information of a candidate device, the analysis module 305 may add such candidate device to the user device's community. Further, the analysis module 305 may generate a community key and/or a community identifier based on the synchronized capture. For example, the community key and/or the community identifier may be generated from the sensor data or from the fingerprint information. The community identifier may identify the community that a device belongs to. The community key may be an encryption key used for communication within the community identified by the community identifier. The analysis module 305 may encrypt the communication within the community based on the community key and/or the community identifier. This encryption enables secure communication among the devices within the community. Further, as one example of forming a community, the fingerprint information generated at the user device is sent to the candidate devices, such that the fingerprint information of the user device may be compared with the fingerprint information of the candidate devices. In one example, the fingerprint data may generated as small packets of data such that they can be sent as a broadcast, instead of sending it via a point-to-point transmission or media stream. The candidate devices having the fingerprint information that sufficiently match the fingerprint information of the user device are added to the user device's community.

In another example, the community may be created without sending the fingerprint information to the candidate devices. In this example, the candidate devices having the sensor data that sufficiently matches the sensor data of the user device have the same or similar community key and/or the community identifier. Thus, when the devices communicate, only the candidate devices having the same or similar community key and/or the community identifier that matches with the community key and/or the community identifier of the user device can perform communication. In this case, the user device may send communication that is encrypted with the community key of the user device, and a candidate device may attempt to decrypt the communication with the community key of the candidate device. If the community key of the candidate device sufficiently matches with the community key of the user device, then the community key of the candidate device can decrypt this communication.

FIG. 4 is a flowchart of a process for selecting devices for creating a community, according to one embodiment. In one embodiment, the network manager 105 performs the process 400 and is implemented in, for instance, a chip set including a processor and a memory as shown in FIG. 9. In step 401, the network manager 105 determines one or more candidate devices within proximity of at least one device (e.g. user device). In one embodiment, the network manager 105 may determine a network topology and then determine the candidate devices based on the network topology. The network topology may provide information as to the positions of the devices (e.g. UEs 101a-101n) with respect to one another. Therefore, the network topology may show the distance between the user device and each of the devices. The devices that are within a close proximity of the user device may then be determined as candidate devices. Further, because the devices may move, the network topology may change with the changes in location of the devices. The network manager 105 may also determine a change in the network topology and update the community based on the change in the network topology. For example, if a device that was too far from the user device to be considered a candidate device is moved close to the user device, the network topology changes due to this movement. In this example, because this device is close to the user device, the network topology shows a close proximity of this device to the user device, and thus the network manager 105 determines this device as a candidate device. Instead of using the network topology, signal strength for communication between the user device and another device may be considered in determining the candidate devices. In this example, if the signal strength between the user device and this device is strong, then this device may be determined as a candidate device.

In step 403, the network manager 105 determines to initiate at least one synchronized capture of sensor data by the device and the candidate devices. The sensor data may relate to one or more characteristics, one or more contexts, or a combination thereof of respective environments of the device, the one or more candidate devices, or a combination thereof. For example, the sensor data may include audio data, video data, brightness data, loudness data, location data, etc. In one embodiment, the network manager 105 may determine a start time and/or a stop time of the synchronized capture. If the start time and/or the stop time are specified, the network manager 105 initiates the synchronized capture by the device and the candidate devices at the start time, and/or stops the capture at the stop time. In another example, a synchronous timer (ST) may be used to coordinate the start time and/or the stop time in the device and the candidate devices. ST may be a service that can be provided for all devices connected via a network such as the mesh network 200 or a communication network. The devices may be registered for the ST service, and then the ST service may provide a synchronized capture by the device and the candidate devices in the same network. The synchronization may be based on a timing synchronization function (TSF) such as WLAN TSF.

In addition, there may be different types of sensors to acquire the sensor data at the devices. The network manager 105 may determine contexts associated with the device and/or the candidate devices, and determine sensors associated with the device and/or the candidate devices based on the contexts such that these sensors are used to perform the synchronized capture of the sensor data. Thus, in this embodiment, some sensors may be preferred to be used for the synchronized capture depending on the contexts. For example, if a user having the device is jogging, the GPS sensor may be preferred to be used because the GPS sensor may be already turned on by a user during jogging to track the user's jogging route. In another embodiment, the network manager 105 may cause generation of a signal by the device and/or the candidate devices. Then, the synchronized capture may be performed based on this generated signal. For example, a voice pulse may be generated at the device, and via the synchronous capture, this voice pulse may be captured at the device and the candidate devices. In one example, the network manager 105 may determine the time the device received the generated voice pulse. If there is too much lag between the time the voice pulse is generated and the time of capture, then the device that experiences such lag in capture may not be included in the community.

Further, in another embodiment, the network manager 105 may monitor for an ambient signal at the device and/or the candidate devices, and base the synchronous capture on the ambient signal. The data captured by the sensor 107 may sometimes have little value. For example, an audio data recorded by a microphone (sensor) in a quiet room with no sound may not have sufficient information to rely on as information for forming the community. Therefore, the network manager 105 may monitor to determine whether there is sufficient ambient signal that may provide sufficient information. For example, if the microphone captures audio that is sufficiently high, the network manager 105 may determine that the ambient signal is present, and then trigger the synchronous capture of the audio data by the device and the candidate devices.

In step 405, the network manager 105 forms a community based, at least in part, on the at least one synchronized capture. The network manager 105 may compare the sensor data captured by the device with the sensor data captured by the candidate devices, and determine whether there is a sufficient match for the candidate devices to join the device's community. Also, as explained above, if the sensor data is data created by capturing a signal generated at the device, the network manager 105 may also examine the time of the capture of the sensor data, to determine whether there is too much lag in time of capture of the sensor data. This step is explained in more detail in FIG. 5.

This process is advantageous in that it provides a way to form a community based on the proximity as well as the synchronous capture of the sensor data, and thus providing more accurate result in determining devices that are to be in the same community as the user device. The network manager 105 is a means for achieving this advantage.

FIG. 5 is a flowchart of a process for creating a community based on the synchronous capture, according to one embodiment. In one embodiment, the network manager 105 performs the process 500 and is implemented in, for instance, a chip set including a processor and a memory as shown in FIG. 9. In step 501, the network manager 105 performs a synchronous capture of the sensor data by the device and the candidate devices. In step 503, the network manager 105 may generate fingerprint information based on the synchronous capture. The fingerprint information may be generated by processing the captured sensor data. Further, in step 503, the network manager 105 may also generate a community key and/or a community identifier. The community key and/or the community identifier may be generated from the fingerprint information or directly from the captured data. The community key may be used as an encryption key to encrypt communication between devices in the same community. The community identifier identifies which community the device belongs to. Therefore, based on the community key and/or the community identifier, the network manager 105 may encrypt the communication within the community. Because each of the device and the candidate devices has its respective sensor data, its respective fingerprint information, community key and community identifier may be generated based on its respective sensor data.

In step 505, the network manager 105 may form a community based on the fingerprint information and/or the community key and/or the community identifier. In one embodiment, the fingerprint information of the device may be compared with the fingerprint information of the candidate devices. In order to perform this comparison, the fingerprint information may be sent to one another for comparison. If the fingerprint information is in a small packet, it may be sent as a broadcast over the mesh network 200, for example. A candidate device having fingerprint information that sufficiently matches with the fingerprint information of the device may be included in the community. In another embodiment, using the community key and/or the community identifier, the community may be formed. For example, if a candidate device has the community key and the community identifier that sufficiently match with the community key and/or the community identifier of the device, then the candidate device may be included in the device's community. The devices in the same community may perform encrypted communication based on the community key. For example, if a device in the same community transmits communication encrypted with the community key, the recipient of the encrypted communication may be able to decrypt it using the same community key, because the devices in the same community have the same or sufficiently similar community key.

This process is advantageous in that it provides a way to analyze the sensor data captured in a synchronous manner, so as to determine whether the analysis of the sensor data shows sufficient match between the devices to form a community including these devices. The network manager 105 is a means for achieving this advantage.

FIGs. 6A-6D are diagrams of example processes for selecting devices for creating a community, according to various embodiments. FIG. 6A shows a diagram of processes used for detecting devices that can be used to form a community using a sensor. In this example, there are three devices, a user device 601, a candidate device A 603 and a candidate device B 605. In step 611, the user device 601 performs a proximity detection to determine the candidate devices for the user device's community. The proximity detection may be based on a wireless signal-power measurement and/or network topology estimation, as discussed previously. Then, the user device 601 triggers a synchronous timer. In step 613, the timer is started in all devices including the user device 601, the candidate device A 603 and the candidate device B 605, in a synchronous manner. After the timer is started, the time out event is triggered in all devices, as shown in step 615. The timeout event may be an event of data recording that takes places in all of the devices synchronously. As the timeout event is triggered, each of the user device 601, the candidate device A 603 and the candidate device B 605 records the sensor data, in step 617. Then, in step 619, the recorded data is processed to create fingerprint data for each recorded data, and the fingerprint data is broadcasted to all devices of the network within the proximity. When a device receives a fingerprint from another device, it compares the received fingerprint data with its own fingerprint data, as shown in step 621. If there is a match, then these devices are considered to be in the same community (e.g. same space).

FIG. 6B shows a diagram of processes that is an alternate method to the processes shown in FIG. 6A. FIG. 6B shows a user device 631, a candidate device A 633 and a candidate device B 635. In Fig. 6B, steps 641 - 645 are the same as steps 611 - 615 of FIG. 6A. Then, in step 647, the user device 631 can generate a voice pulse (or an artificial audio signal), and then the candidate device A 633 and the candidate device B 635 can record the time they heard the voice pulse by the user device 631. Then, in step 649, the candidate device A 633 and the candidate device B 635 can send the time information to each other and to the user device 631, wherein the time information includes the time when the pulses were heard at the candidate device A 633 and the candidate device B 635. Then, the user device 631, the candidate device A 633, the candidate device B 635 can compare the time information to determine whether the devices are in the same community. If the time information shows that the voice pulse is heard at a very close time in the devices, then these devices may be in the same community. For example, if the user device 631 generated the voice signal at 1 second and 2.5 seconds after the timeout event is triggered, and the candidate device A 633 recorded the signal at 1 second and 2.5 seconds and the candidate device B 635 recorded the signal at 1.2 seconds and 2.6 seconds, then the candidate device A 633 may be included in the same community whereas the candidate device B 635 may not be in the same community.

FIG. 6C shows a diagram of processes for communicating based on a community key and a community identifier. FIG. 6B shows an application 661 representing each application in the devices and a community layer 663 represents a community of the devices. In step 671, each of the devices including the user device and the candidate devices generates a community key (K) and a community identifier (C) based on the respective captured sensor data. The community key and/or the community identifier may be generated from the fingerprint information that is generated by processing the sensor data. In step 673, a community of the devices is created based on the community key and the community identifier. In step 675, in the community layer 663, the communication traffic in the community is encrypted. For example, when a communication to be transmitted is generated, this communication is encrypted using the community key (K). Also, when an encrypted communication is received, this is decrypted using the community key (K). The devices within the same community will have the same community key, and thus are able to encrypt/decrypt the communication traffic using the same community key.

FIG. 6D shows a diagram of processes for creating a community using a community key. FIG. 6D shows a user device 681, a candidate device A 683 and a candidate device B 685. These processes may take place after determining whether the candidate device A 683 and the candidate device B 685 are in the same space as the user device 681, according to the processes shown in FIGs. 6A and 6B, for example. In this example diagram, in step 691, the user device knows that the candidate device A 683 and the candidate device B 685 are in the same space. Steps 693, 695 and 697 are similar to steps 613, 615 and 617 of FIG. 6A. Thus, in step 693, the user device starts a timer event in the user device 680, the candidate device A 683, and the candidate device B 685, and then the timeout event is triggered in the user device 680, the candidate device A 683, and the candidate device B 685, as shown in step 695. With the trigger of the timeout event, sensor data is recorded at each of the user device 680, the candidate device A 683, and the candidate device B 685, as shown in step 697. The recorded data at each device is processed to create fingerprint information, as shown in step 698. Then, in step 699, a community key is generated based on the fingerprint information at each device, and is used to form a community. In this case, all devices that are in the same space have the same community key, and thus are able to encrypt the outgoing communication and decrypt the encrypted incoming communication using the same community key.

FIGs. 7A-7B are diagrams of user interfaces utilized in the processes of FIG. 3, according to various embodiments. FIG. 7A shows a user interface 700 before the synchronized capture is made. The user name section 701 shows that the user of the device has the name "Jeff." The title section 703 shows that this user interface is for a proximity application. The proximity application shows the user bars 705, 707, 709, 711 and 713 showing the respective names John, Jill, Jim, Anne and Jack corresponding to their devices and their user pictures. Further, the user bars 705, 707, 709, 711 and 713 also show distance information. In this example, the proximity sections 715, 717, 719, 721 and 723 show that the devices of John, Jill, Jim and Anne are near the user device of Jeff, and the device of Jack is far from the device of Jeff. Therefore, the devices of John, Jill, Jim and Anne may be considered as candidate devices for forming a community. The user bars 705, 707, 709, 711 and 713 also have selection boxes 725, 727, 729, 731 and 733 that can be used to manually select users for a community. The "check who are in same space" button 735 may be selected to perform synchronous capture of the sensor data to determine which devices are eligible for forming the community with the user JEFF. The "create community" button 737 may be selected to form a community with users.

FIG. 7B shows a user interface 750 after the synchronized capture of the sensor data is made, and analysis on the sensor data is performed. The user name section 751 shows that the user of the device has the name "Jeff," and the title section 753 shows that this user interface is for a proximity application. The proximity application shows the user bars 755, 757, 759, 761 and 763 showing the respective names John, Jill, Jim, Anne and Jack corresponding to their devices and their user pictures. This user interface 750 shows an interface after finding out the users in the same space to form a community based on the sensor data. Thus, the proximity sections 765, 767 and 769 show that John, Jill and Jim are in the same space as Jeff based on the analysis of the sensor data, and are near Jeff. The proximity section 771 shows that Anne is near Jeff, but the analysis of the sensor data shows that Anne is not in the same space. By way of example, Anne may be near Jeff based on the signal strength and/or a network topology, but may not be close enough to Jeff to be considered in the same place based on the analysis of the sensor data. The proximity section 773 shows that Jack is far and is not in the same space. Because the device of Jack is far, it was not a candidate device, and thus automatically is not in the same space. The selection boxes 775, 777 and 779 have been automatically selected to include John, Jill and Jim in the same community as the devices John, Jill and Jim are found to be in the same space.

The selection boxes 781 and 783 are not selected because the devices of Anne and Jack are not found to be in the same space, and thus are not included in the community. However, if the user (e.g. Jeff) may manually select and/or unselect the selection boxes 775-783 to determine which user to include in the community. The "check who are in same space" button 735 may be selected to perform synchronous capture of the sensor data again and update the information. The "create community" button 787 may be selected to form a community with users with the selection boxes selected.

The processes described herein for selecting devices to form a community may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

FIG. 8 illustrates a computer system 800 upon which an embodiment of the invention may be implemented. Although computer system 800 is depicted with respect to a particular device or equipment, it is contemplated that other devices or equipment (e.g., network elements, servers, etc.) within FIG. 8 can deploy the illustrated hardware and components of system 800. Computer system 800 is programmed (e.g., via computer program code or instructions) to select devices to form a community as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 800, or a portion thereof, constitutes a means for performing one or more steps of selecting devices to form a community.

A bus 810 includes one or more parallel conductors of information so that information is transferred quickly among devices coupled to the bus 810. One or more processors 802 for processing information are coupled with the bus 810.

A processor (or multiple processors) 802 performs a set of operations on information as specified by computer program code related to selecting devices to form a community. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or any other dynamic storage device, stores information including processor instructions for selecting devices to form a community. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or any other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for selecting devices to form a community, is provided to the bus 810 for use by the processor from an external input device 812, such as a keyboard containing alphanumeric keys operated by a human user, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT), a liquid crystal display (LCD), a light emitting diode (LED) display, an organic LED (OLED) display, a plasma screen, or a printer for presenting text or images, and a pointing device 816, such as a mouse, a trackball, cursor direction keys, or a motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of ASICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network (not shown) and/or to other devices in the mesh network 200 for selecting devices to form a community.

The term "computer-readable medium" as used herein refers to any medium that participates in providing information to processor 802, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 808. Volatile media include, for example, dynamic memory 804. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 820.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communication network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of system 800 can be deployed in various configurations within other computer systems, e.g., host 882 and server 892.

At least some embodiments of the invention are related to the use of computer system 800 for implementing some or all of the techniques described herein. According to one embodiment of the invention, those techniques are performed by computer system 800 in response to processor 802 executing one or more sequences of one or more processor instructions contained in memory 804. Such instructions, also called computer instructions, software and program code, may be read into memory 804 from another computer-readable medium such as storage device 808 or network link 878. Execution of the sequences of instructions contained in memory 804 causes processor 802 to perform one or more of the method steps described herein. In alternative embodiments, hardware, such as ASIC 820, may be used in place of or in combination with software to implement the invention. Thus, embodiments of the invention are not limited to any specific combination of hardware and software, unless otherwise explicitly stated herein.

The signals transmitted over network link 878 and other networks through communications interface 870, carry information to and from computer system 800. Computer system 800 can send and receive information, including program code, through the networks 880, 890 among others, through network link 878 and communications interface 870. In an example using the Internet 890, a server host 892 transmits program code for a particular application, requested by a message sent from computer 800, through Internet 890, ISP equipment 884, local network 880 and communications interface 870. The received code may be executed by processor 802 as it is received, or may be stored in memory 804 or in storage device 808 or any other non-volatile storage for later execution, or both. In this manner, computer system 800 may obtain application program code in the form of signals on a carrier wave.

Various forms of computer readable media may be involved in carrying one or more sequence of instructions or data or both to processor 802 for execution. For example, instructions and data may initially be carried on a magnetic disk of a remote computer such as host 882. The remote computer loads the instructions and data into its dynamic memory and sends the instructions and data over a telephone line using a modem. A modem local to the computer system 800 receives the instructions and data on a telephone line and uses an infra-red transmitter to convert the instructions and data to a signal on an infra-red carrier wave serving as the network link 878. An infrared detector serving as communications interface 870 receives the instructions and data carried in the infrared signal and places information representing the instructions and data onto bus 810. Bus 810 carries the information to memory 804 from which processor 802 retrieves and executes the instructions using some of the data sent with the instructions. The instructions and data received in memory 804 may optionally be stored on storage device 808, either before or after execution by the processor 802.

FIG. 9 illustrates a chip set or chip 900 upon which an embodiment of the invention may be implemented. Chip set 900 is programmed to select devices to form a community as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 900 can be implemented in a single chip. It is further contemplated that in certain embodiments the chip set or chip 900 can be implemented as a single "system on a chip." It is further contemplated that in certain embodiments a separate ASIC would not be used, for example, and that all relevant functions as disclosed herein would be performed by a processor or processors. Chip set or chip 900, or a portion thereof, constitutes a means for performing one or more steps of providing user interface navigation information associated with the availability of functions. Chip set or chip 900, or a portion thereof, constitutes a means for performing one or more steps of selecting devices to form a community.

In one embodiment, the chip set or chip 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a more general purpose processor. Other specialized components to aid in performing the inventive functions described herein may include one or more field programmable gate arrays (FPGA) (not shown), one or more controllers (not shown), or one or more other special-purpose computer chips.

In one embodiment, the chip set or chip 900 includes merely one or more processors and some software and/or firmware supporting and/or relating to and/or for the one or more processors.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to select devices to form a community. The memory 905 also stores the data associated with or generated by the execution of the inventive steps.

FIG. 10 is a diagram of exemplary components of a mobile terminal (e.g., handset) for communications, which is capable of operating in the system of FIG. 1, according to one embodiment. In some embodiments, mobile terminal 1001, or a portion thereof, constitutes a means for performing one or more steps of selecting devices to form a community. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile terminal functions that perform or support the steps of selecting devices to form a community. The display 1007 includes display circuitry configured to display at least a portion of a user interface of the mobile terminal (e.g., mobile telephone). Additionally, the display 1007 and display circuitry are configured to facilitate user control of at least some functions of the mobile terminal. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile terminal 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003 which can be implemented as a Central Processing Unit (CPU) (not shown).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile terminal 1001 to select devices to form a community. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the terminal. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile terminal 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable storage medium known in the art. The memory device 1051 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1049 carries, for instance, important information, such as the cellular phone number, the carrier supplying service, subscription details, and security information. The SIM card 1049 serves primarily to identify the mobile terminal 1001 on a radio network. The card 1049 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

**1.** A method comprising
determining (401, 611), using wireless nodes (103a-103n) within a mesh network (200), proximity of one or more candidate devices (101b-101n) to a first device (101a), wherein the one or more candidate devices (101b-101n) have:

a) direct and indirect connectivity to the first device via respective wireless nodes (103a-103n) of the first device and the one or more candidate devices within the mesh network (200); and
b) further connectivity between each other via a second wireless network independent of the mesh network;

initiating (403) at least one synchronized capture of sensor data by the first device (101a) and at least one of the one or more candidate devices determined to be within proximity of one another, wherein the sensor data relates to one or more locally sensed ambient characteristics, one or more ambient contexts or a combination thereof in respective environments of the first device, the one or more candidate devices or a combination thereof; and
comparing the sensor data from the first device and the one or more candidate devices to determine a level of similarity in said ambient characteristics or ambient contexts locally sensed by devices in the mesh network, and
forming (405, 673) a community of devices based, at least in part, on the at least one synchronized capture for devices determined to be within proximity of one another, wherein membership of the community is based at least in part on said determined level of similarity.

**2.** A method of claim 1, further comprising:

determining a network topology,
wherein the determination of the one or more candidate devices is based, at least in part, on the network topology.

**3.** A method according to any of claims 1 and 2, further comprising:

determining at least one start time (613, 643), at least one stop time (615, 645), or a combination thereof of the at least one synchronized capture,
wherein the at least one synchronized capture is based, at least in part, on the at least one start time, the at least one stop time, or a combination thereof.

**4.** A method according to any of claims 1 to 3, further comprising:

determining one or more contexts associated with the first device, at least one of the one or more candidate devices, or a combination thereof; and
determining one or more sensors associated with the first device, the at least one of the one or more candidate devices, or a combination thereof based, at least in part, on the one or more contexts,
wherein the synchronized capture is based, at least in part, on the one or more sensors.

**5.** A method according to any of claims 1 to 4, further comprising:

causing, at least in part, a generation of at least one signal by the first device, at least one of the one or more candidate devices, or a combination thereof,
wherein the synchronized capture is based, at least in part, on the at least one signal.

**6.** A method according to any of claims 1 to 5, further comprising:

monitoring at least one ambient signal at the first device, at least one of the one or more candidate devices, or a combination thereof,
wherein the synchronized capture is based, at least in part, on the at least one ambient signal.

**7.** A method according to any of claims 1 to 6, further comprising:

determining (503) fingerprint information based, at least in part, on the synchronized capture,
wherein the determining to form the community is based, at least in part, on the fingerprint information.

**8.** A method according to any of claims 1 to 7, further comprising:
generating (671) a community key, a community identifier, or a combination thereof based, at least in part, on the synchronized capture.

**9.** A method according to claim 8, further comprising:
encrypting communication within the community based, at least in part, on the community key, the community identifier, or a combination thereof.

**10.** A method according to any of claims 2 to 9, further comprising:

determining at least one change in the network topography; and
updating the community based, at least in part, on the at least one change.

**11.** A method according to any of claim 1 to 10, wherein the sensor data relates toone or more characteristics or contexts selected from the group comprising: audio recording, video images, local brightness or determined speed.

**12.** An apparatus (101a-101n) comprising means (105a-105n) configured to cause the apparatus to at least perform the method according to any one of claims 1 to 11.

**13.** A computer-readable storage medium carrying one or more sequences of one or more instructions which, when executed by one or more processors, cause an apparatus to at least perform the method according to any one of claims 1 to 11.

## Patentansprüche

**1.** Ein Verfahren, umfassend
das Bestimmen (401, 611) einer Nähe einer oder mehrerer Kandidatenvorrichtungen (101b-101n) zu einer ersten Vorrichtung (101a) unter Verwendung von drahtlosen Knoten (103a-103n) in einem Mesh-Netzwerk (200), wobei die eine oder die mehreren Kandidatenvorrichtungen (101b-101n) aufweisen:

a) eine direkte oder indirekte Konnektivität zu der ersten Vorrichtung über entsprechende drahtlose Knoten (103a-103n) der ersten Vorrichtung und der einen oder der mehreren Kandidatenvorrichtungen im Mesh-Netzwerk (200); und
b) eine weitere Konnektivität zwischen einander über ein zweites vom Mesh-Netzwerk unabhängiges drahtloses Netzwerk;

das Einleiten (403) zumindest einer synchronisierten Erfassung von Sensordaten durch die erste Vorrichtung (101a) und zumindest eine der einen oder der mehreren in der Nähe voneinander bestimmten Kandidatenvorrichtungen, wobei sich die Sensordaten auf eine oder mehrere lokal erfasste Umgebungscharakteristiken, einen oder mehrere Umgebungskontexte oder eine Kombination davon in jeweiligen Umgebungen der ersten Vorrichtung, der einen oder der mehreren Kandidatenvorrichtungen oder einer Kombination davon beziehen; und
das Vergleichen der Sensordaten von der ersten Vorrichtung und der einen oder der mehreren Kandidatenvorrichtungen, um einen Grad der Ähnlichkeit in den durch die Vorrichtungen im Mesh-Netzwerk erfassten Umgebungscharakteristiken oder Umgebungskontexten zu bestimmen, und
das Bilden (405, 673) einer Gemeinschaft von Vorrichtungen zumindest teilweise basierend auf der zumindest einen synchronisierten Erfassung der in der Nähe zueinander bestimmten Vorrichtungen, wobei die Zugehörigkeit zu der Gemeinschaft zumindest teilweise auf dem bestimmten Grad der Ähnlichkeit basiert.

**2.** Ein Verfahren nach Anspruch 1, weiter umfassend:

Bestimmen einer Netzwerk-Topologie,
wobei die Bestimmung der einen oder der mehreren Kandidatenvorrichtungen zumindest teilweise auf der Netzwerk-Topologie basiert.

**3.** Ein Verfahren nach einem der Ansprüche 1 und 2, weiter umfassend:

Bestimmen zumindest einer Startzeit (613, 643), zumindest einer Stoppzeit (615, 645) oder einer Kombination davon der zumindest einen synchronisierten Erfassung,
wobei die zumindest eine synchronisierte Erfassung zumindest teilweise auf der zumindest einen Startzeit, der zumindest einen Stoppzeit oder einer Kombination davon basiert.

**4.** Ein Verfahren nach einem der Ansprüche 1 bis 3, weiter umfassend:

Bestimmen eines oder mehrerer mit der ersten Vorrichtung, zumindest einer der einen oder der mehreren Kandidatenvorrichtungen oder einer Kombination davon assoziierter Kontexte; und
Bestimmen eines oder mehrerer mit der ersten Vorrichtung, zumindest einer der einen oder der mehreren Kandidatenvorrichtungen oder einer Kombination davon assoziierter Sensoren zumindest teilweise basierend auf dem einen oder den mehreren Kontexten,
wobei die synchronisierte Erfassung zumindest teilweise auf dem einen oder den mehreren Sensoren basiert.

**5.** Ein Verfahren nach einem der Ansprüche 1 bis 4, weiter umfassend:

zumindest teilweises Veranlassen einer Generierung von zumindest einem Signal durch die erste Vorrichtung, zumindest eine der einen oder der mehreren Kandidatenvorrichtungen oder einer Kombination davon,
wobei die synchronisierte Erfassung zumindest teilweise auf dem zumindest einen Signal basiert.

**6.** Ein Verfahren nach einem der Ansprüche 1 bis 5, weiter umfassend:

Überwachen zumindest eines Umgebungssignals an der ersten Vorrichtung, zumindest einer der einen oder der mehreren Kandidatenvorrichtungen oder einer Kombination davon,
wobei die synchronisierte Erfassung zumindest teilweise auf dem zumindest einen Umgebungssignal basiert.

**7.** Ein Verfahren nach einem der Ansprüche 1 bis 6, weiter umfassend:

Bestimmen (503) einer Fingerabdruckinformation zumindest teilweise basierend auf der synchronisierten Erfassung,
wobei das Bestimmen, um die Gemeinschaft zu bilden, zumindest teilweise auf der Fingerabdruckinformation basiert.

**8.** Ein Verfahren nach einem der Ansprüche 1 bis 7, weiter umfassend:

Generieren (671) eines Gemeinschaftsschlüssels, eines Gemeinschaftsidentifikators oder einer Kombination davon zumindest teilweise basierend auf der synchronisierten Erfassung.

**9.** Ein Verfahren nach Anspruch 8, weiter umfassend:
Verschlüsseln der Kommunikation in der Gemeinschaft zumindest teilweise basierend auf dem Gemeinschaftsschlüssel, dem Gemeinschaftsidentifikator oder einer Kombination davon.

**10.** Ein Verfahren nach einem der Ansprüche 2 bis 9, weiter umfassend:

Bestimmen zumindest einer Änderung in der Netzwerk-Topographie; und
Aktualisieren der Gemeinschaft zumindest teilweise basierend auf der zumindest einen Änderung.

**11.** Ein Verfahren nach einem der Ansprüche 1 bis 10, wobei sich die Sensordaten auf eine oder mehrere Charakteristiken oder Kontexte beziehen, die aus der Gruppe ausgewählt werden, umfassend: Audioaufzeichnung, Videoaufnahmen, lokale Helligkeit oder bestimmte Geschwindigkeit.

**12.** Eine Vorrichtung (101a-101n), umfassend Mittel (105a-105n), die dazu ausgebildet sind, zu bewirken, dass die Vorrichtung zumindest das Verfahren gemäß einem der Ansprüche 1 bis 11 ausführt.

**13.** Ein computerlesbares Speichermedium mit einer oder mehreren Sequenzen einer oder mehrerer Instruktionen, die bei Ausführung durch einen oder mehrere Prozessoren eine Vorrichtung dazu veranlassen, zumindest das Verfahren nach einem der Ansprüche 1 bis 11 auszuführen.

## Revendications

**1.** Procédé comprenant :

le calcul (401, 611), par le biais de nœuds sans fil (103a-103n) au sein d'un réseau en maillage (200), de la proximité d'un ou plusieurs dispositifs candidats (101b-101n) vis-à-vis d'un premier dispositif (101a), selon lequel le ou les plusieurs dispositifs candidats (101b-101n) présentent :

(a) une connectivité directe et indirecte au premier dispositif via des nœuds sans fil respectif (103a-103n) du premier dispositif et le ou les plusieurs dispositifs candidats au sein du réseau en maillage (200) ; et
(b) une connectivité supplémentaire les uns aux autres via un deuxième réseau sans fil indépendant du réseau en maillage ;

l'initiation (403) d'au moins une capture synchronisée de données de capteur par le premier dispositif (101a) et au moins un du ou des plusieurs dispositifs candidats ayant été calculés comme étant à proximité les uns des autres, selon lequel les données de capteur se rapportent à une ou plusieurs caractéristiques ambiantes détectées localement, un ou plusieurs contextes ambiants ou une combinaison de ceux-ci dans des environnements respectifs du premier dispositif, le ou les plusieurs dispositifs candidats ou une combinaison de ceux-ci ; et
la comparaison des données de capteur en provenance du premier dispositif et du ou des plusieurs dispositifs candidats afin de calculer un degré de similitude dans lesdites caractéristiques ambiantes ou lesdits contextes ambiants détectés localement par des dispositifs dans le réseau de maillage, et
la création (405, 673) d'une communauté de dispositifs basée, au moins pour partie, sur la au moins une capture synchronisée pour des dispositifs ayant été calculés comme étant à proximité les uns des autres, selon laquelle l'appartenance à la communauté se base, au moins pour partie, sur ledit degré de similitude calculé.

**2.** Procédé selon la revendication 1, comprenant en outre : le calcul d'une topologie réseau, selon lequel le calcul du ou des plusieurs dispositifs candidats se base, au moins pour partie, sur la topologie réseau.

**3.** Procédé selon l'une quelconque des revendications 1 ou 2, comprenant en outre le calcul d'au moins un temps de démarrage (613, 643), au moins un temps d'arrêt (615, 645), ou d'une combinaison de ceux-ci, de la au moins une capture synchronisée, selon lequel la au moins une capture synchronisée se base, au moins pour partie, sur le au moins un temps de démarrage, le au moins un temps d'arrêt, ou d'une combinaison de ceux-ci.

**4.** Procédé selon l'une quelconque des revendications 1 à 3, comprenant en outre :

le calcul d'un ou de plusieurs contextes associés au premier dispositif, au au moins un parmi le ou les plusieurs dispositifs candidats, ou à une combinaison de ceux-ci ; et
le calcul d'un ou plusieurs capteurs associés au premier dispositif, au au moins un parmi le ou les plusieurs dispositifs candidats, ou à une combinaison de ceux-ci sur la base, au moins pour partie, de l'un ou des plusieurs contextes,
selon lequel la capture synchronisée se base, au moins pour partie, sur le ou les plusieurs capteurs.

**5.** Procédé selon l'une quelconque des revendications 1 à 4, comprenant en outre :

le fait, au moins pour partie, de générer d'au moins un signal par le biais du premier dispositif, d'au moins un parmi le ou les plusieurs dispositifs candidats, ou d'une combinaison de ceux-ci,
selon lequel la capture synchronisée se base, au moins pour partie, sur le au moins un signal.

**6.** Procédé selon l'une quelconque des revendications 1 à 5, comprenant en outre :

la surveillance d'au moins un signal ambiant au niveau du premier dispositif, au niveau de au moins un du ou des plusieurs dispositifs candidats, ou au niveau d'une combinaison de ceux-ci,
selon lequel la capture synchronisée se base, au moins pour partie, sur le au moins un signal ambiant.

**7.** Procédé selon l'une quelconque des revendications 1 à 6, comprenant en outre :

le calcul (503) d'informations d'empreinte sur la base, au moins pour partie, sur la capture synchronisée,
selon lequel le calcul pour créer la communauté se base, au moins pour partie, sur les informations d'empreinte.

**8.** Procédé selon l'une quelconque des revendications 1 à 7, comprenant en outre :
la création (671) d'une clé de communauté, d'un identifiant de communauté, ou d'une combinaison de ceux-ci, sur la base, au moins pour partie, de la capture synchronisée.

**9.** Procédé selon la revendication 8, comprenant en outre :
le chiffrage de la communication au sein de la communauté sur la base, au moins pour partie, de la clé de communauté, de l'identifiant de communauté, ou d'une combinaison de ceux-ci.

**10.** Procédé selon l'une quelconque des revendications 2 à 9, comprenant en outre :
le calcul d'au moins un changement dans la topographie réseau; et la mise à jour de la communauté sur la base, au moins pour partie, sur le au moins un changement.

**11.** Procédé selon l'une quelconque des revendications 1 à 10, selon lequel les données de capteur se rapportent à une ou plusieurs caractéristiques ou contextes choisis dans le groupe comprenant: de l'enregistrement audio, des images vidéo, de la luminosité locale ou d'une vitesse calculée.

**12.** Équipement (101a-101n) comprenant des moyens (105a-105n) configurés pour faire fonctionner l'équipement de manière à effectuer au moins le procédé selon l'une quelconque des revendications 1 à 11.

**13.** Moyen de stockage lisible par ordinateur comportant une ou plusieurs séquences d'une ou plusieurs instructions qui, lorsqu'elles sont exécutées par un ou plusieurs processeurs, ont pour effet de faire fonctionner un équipement de manière à effectuer au moins le procédé selon l'une quelconque des revendications 1 à 11.

FIG. 1

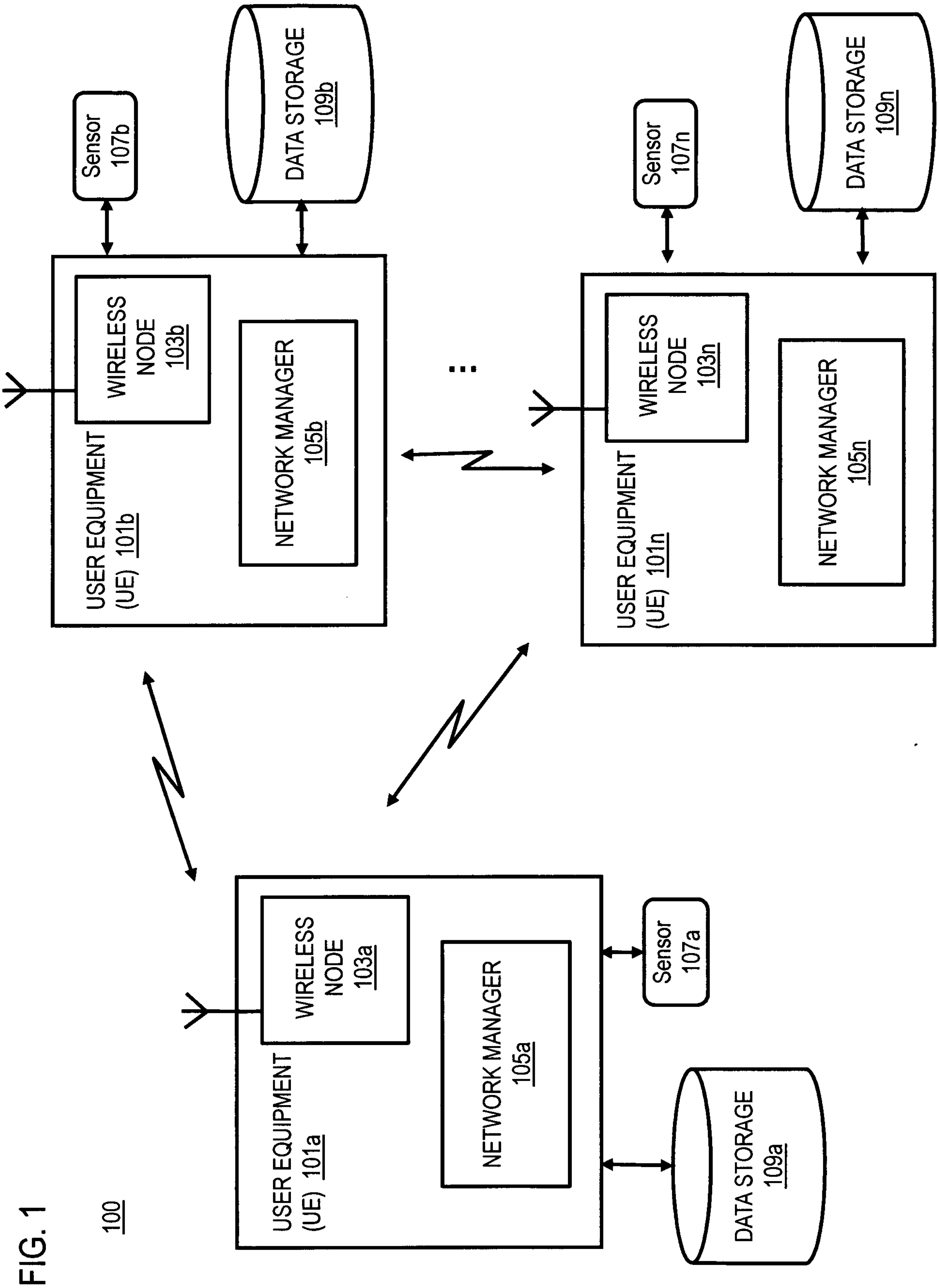
100
USER EQUIPMENT (UE) 101a
WIRELESS NODE 103a
NETWORK MANAGER 105a
Sensor 107a
DATA STORAGE 109a
USER EQUIPMENT (UE) 101b
WIRELESS NODE 103b
NETWORK MANAGER 105b
Sensor 107b
DATA STORAGE 109b
...
USER EQUIPMENT (UE) 101n
WIRELESS NODE 103n
NETWORK MANAGER 105n
Sensor 107n
DATA STORAGE 109n

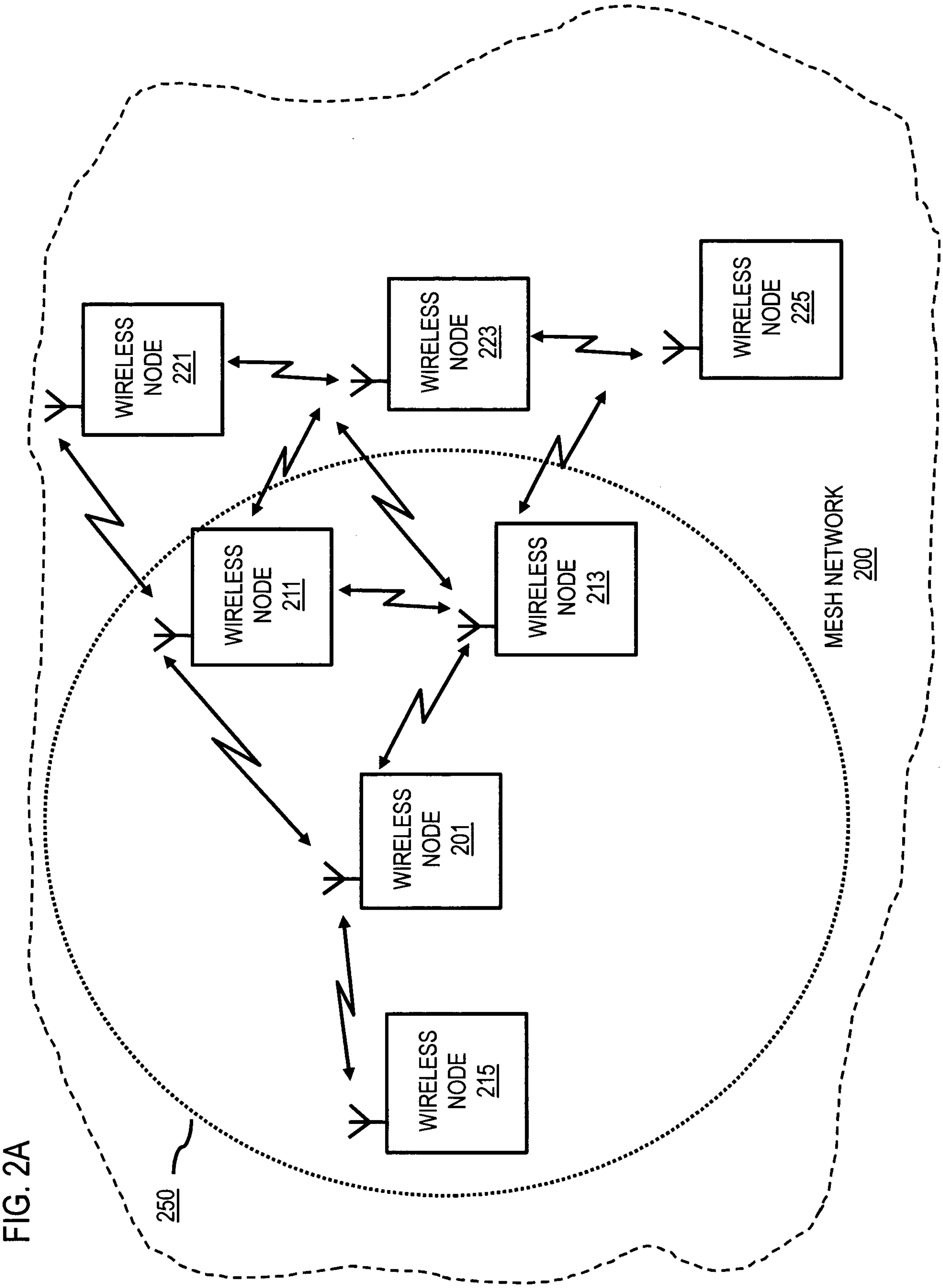
WIRELESS NODE 221
WIRELESS NODE 223
WIRELESS NODE 225
WIRELESS NODE 211
WIRELESS NODE 213
WIRELESS NODE 201
WIRELESS NODE 215
MESH NETWORK 200
250

FIG. 2A

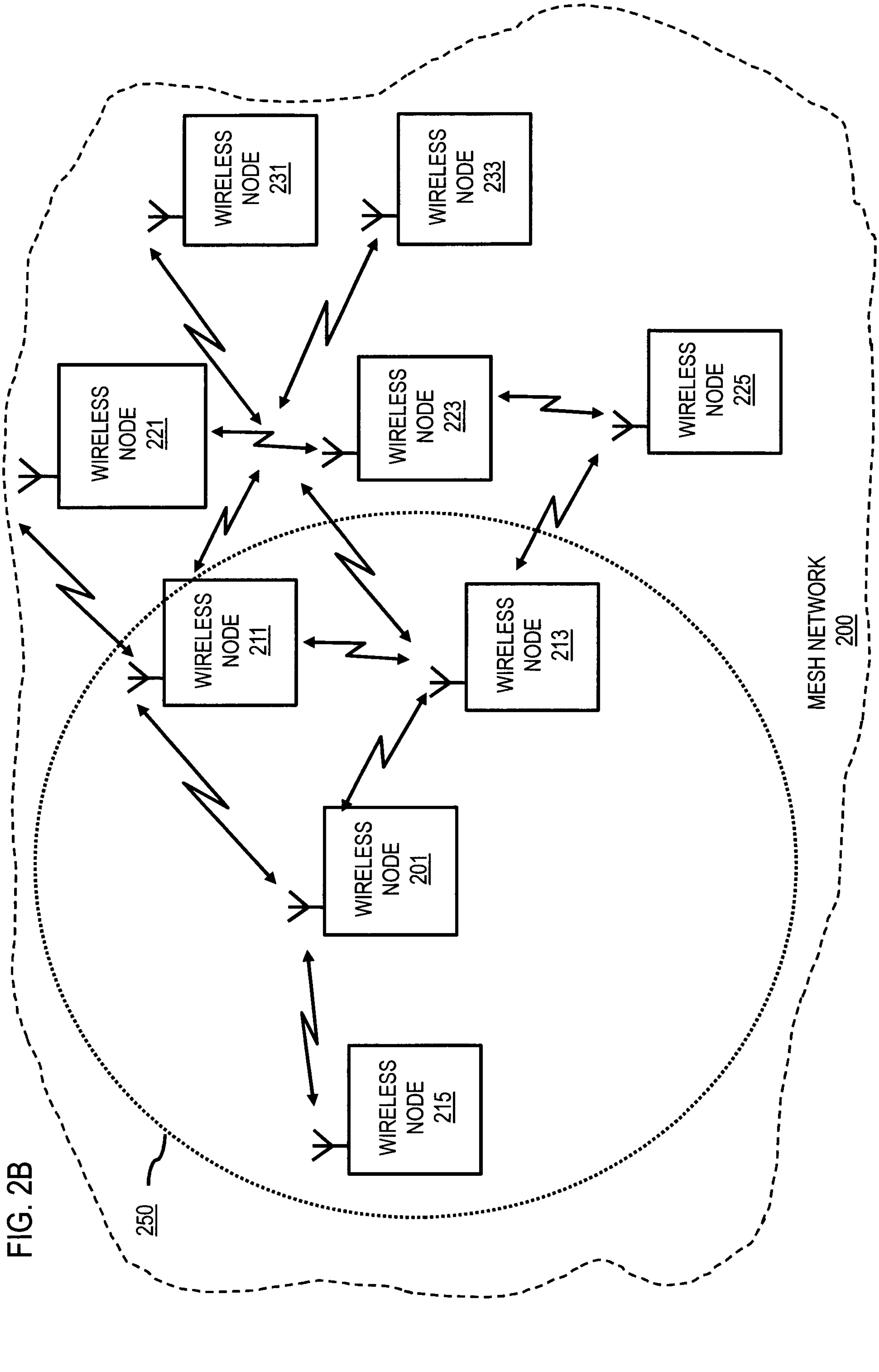
WIRELESS NODE 231
WIRELESS NODE 233
WIRELESS NODE 221
WIRELESS NODE 223
WIRELESS NODE 225
WIRELESS NODE 211
WIRELESS NODE 213
WIRELESS NODE 201
WIRELESS NODE 215
MESH NETWORK 200
250

FIG. 2B

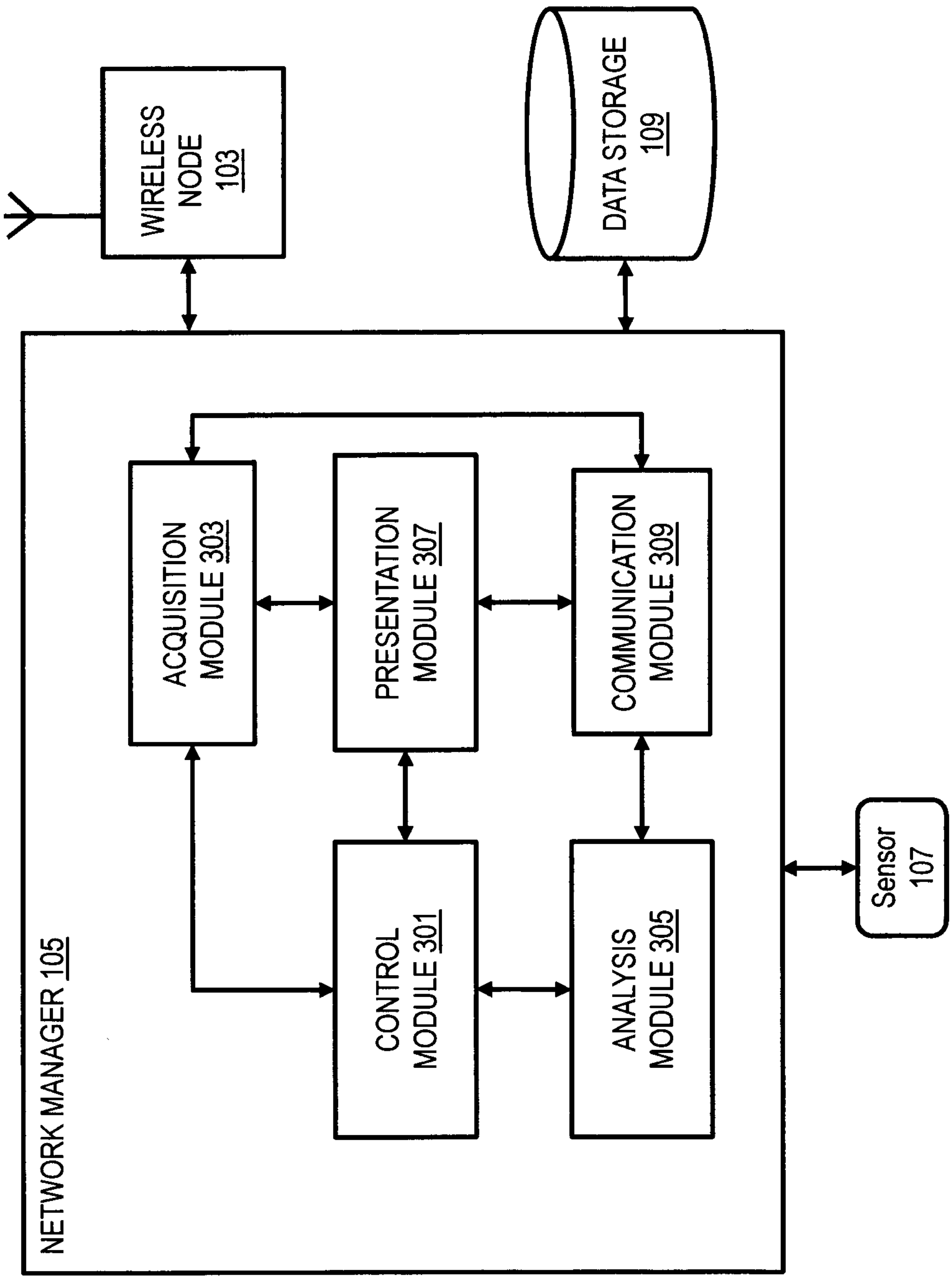
WIRELESS NODE 103
DATA STORAGE 109
NETWORK MANAGER 105
ACQUISITION MODULE 303
PRESENTATION MODULE 307
COMMUNICATION MODULE 309
CONTROL MODULE 301
ANALYSIS MODULE 305
Sensor 107

FIG. 3

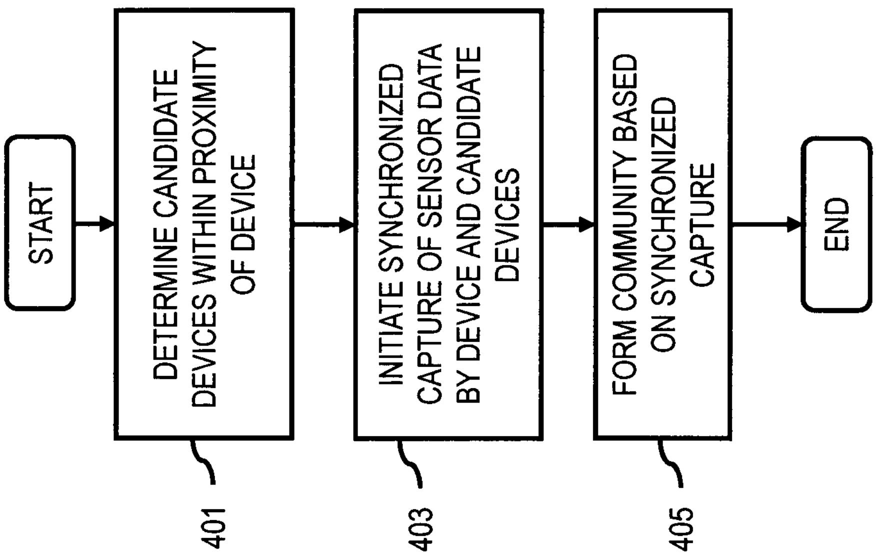
START
DETERMINE CANDIDATE DEVICES WITHIN PROXIMITY OF DEVICE
401
INITIATE SYNCHRONIZED CAPTURE OF SENSOR DATA BY DEVICE AND CANDIDATE DEVICES
403
FORM COMMUNITY BASED ON SYNCHRONIZED CAPTURE
405
END

400

FIG. 4

FIG. 5

500

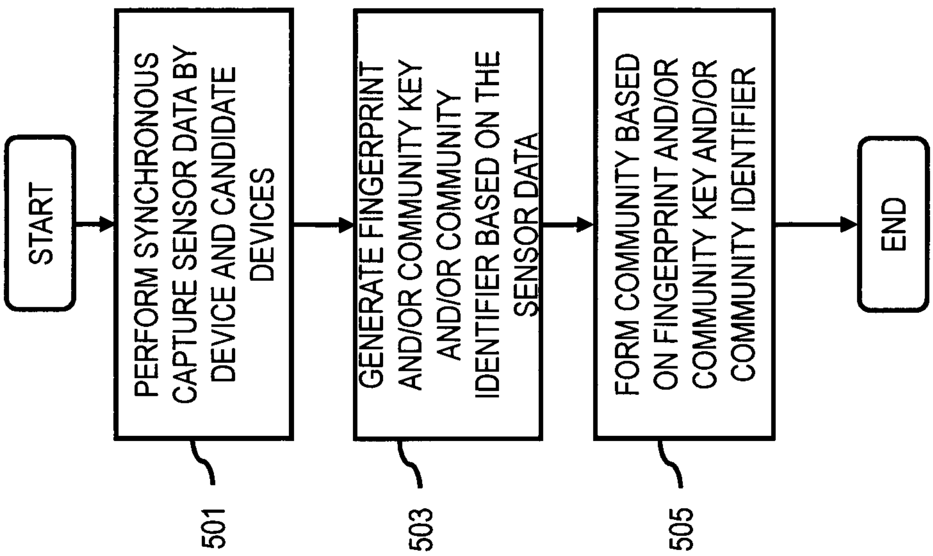
START
PERFORM SYNCHRONOUS CAPTURE SENSOR DATA BY DEVICE AND CANDIDATE DEVICES
501
GENERATE FINGERPRINT AND/OR COMMUNITY KEY AND/OR COMMUNITY IDENTIFIER BASED ON THE SENSOR DATA
503
FORM COMMUNITY BASED ON FINGERPRINT AND/OR COMMUNITY KEY AND/OR COMMUNITY IDENTIFIER
505
END

FIG. 6A

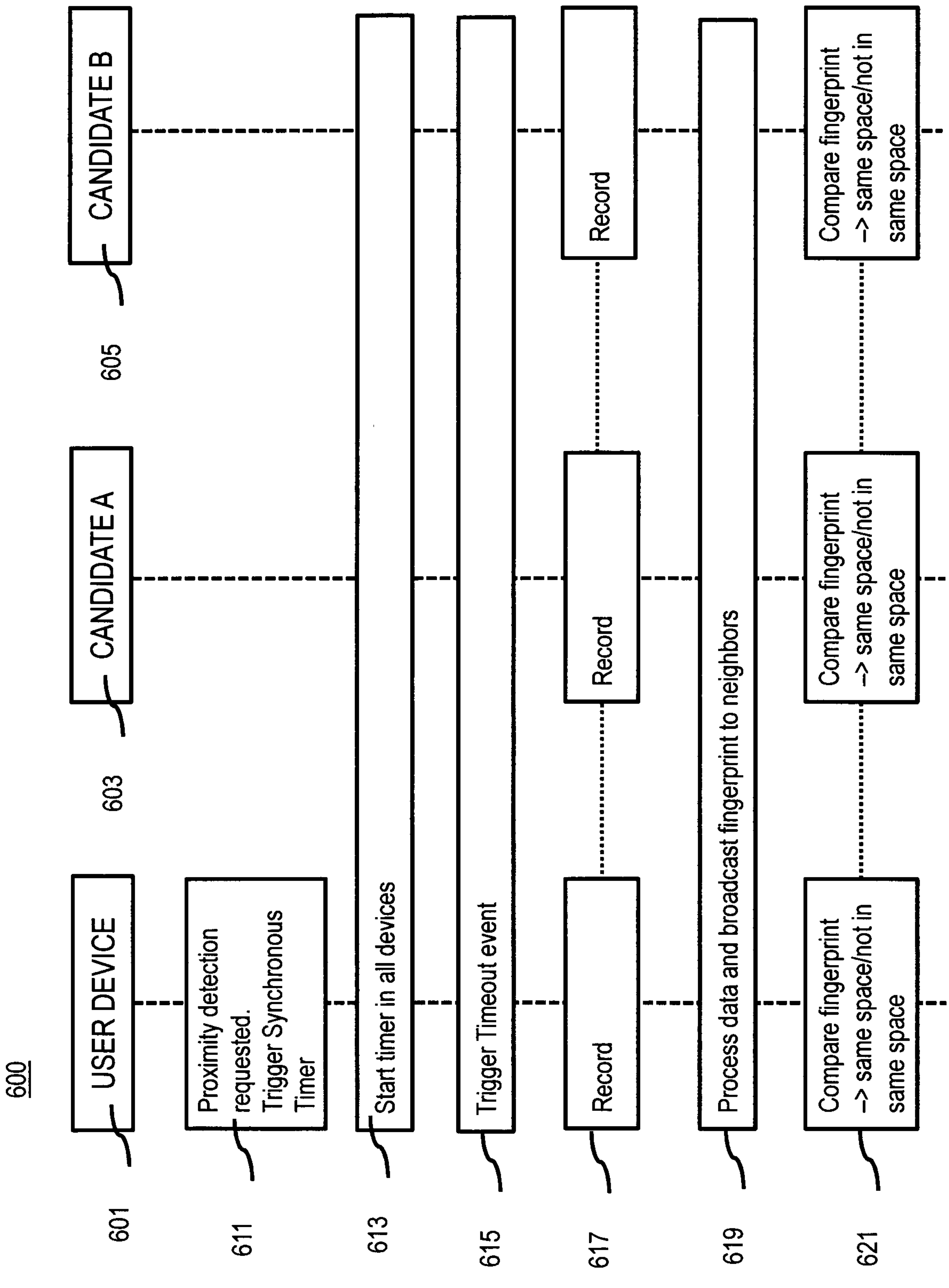
600
601
USER DEVICE
603
CANDIDATE A
605
CANDIDATE B
611
Proximity detection requested. Trigger Synchronous Timer
613
Start timer in all devices
615
Trigger Timeout event
617
Record
Record
Record
619
Process data and broadcast fingerprint to neighbors
621
Compare fingerprint --> same space/not in same space
Compare fingerprint --> same space/not in same space
Compare fingerprint --> same space/not in same space

FIG. 6B

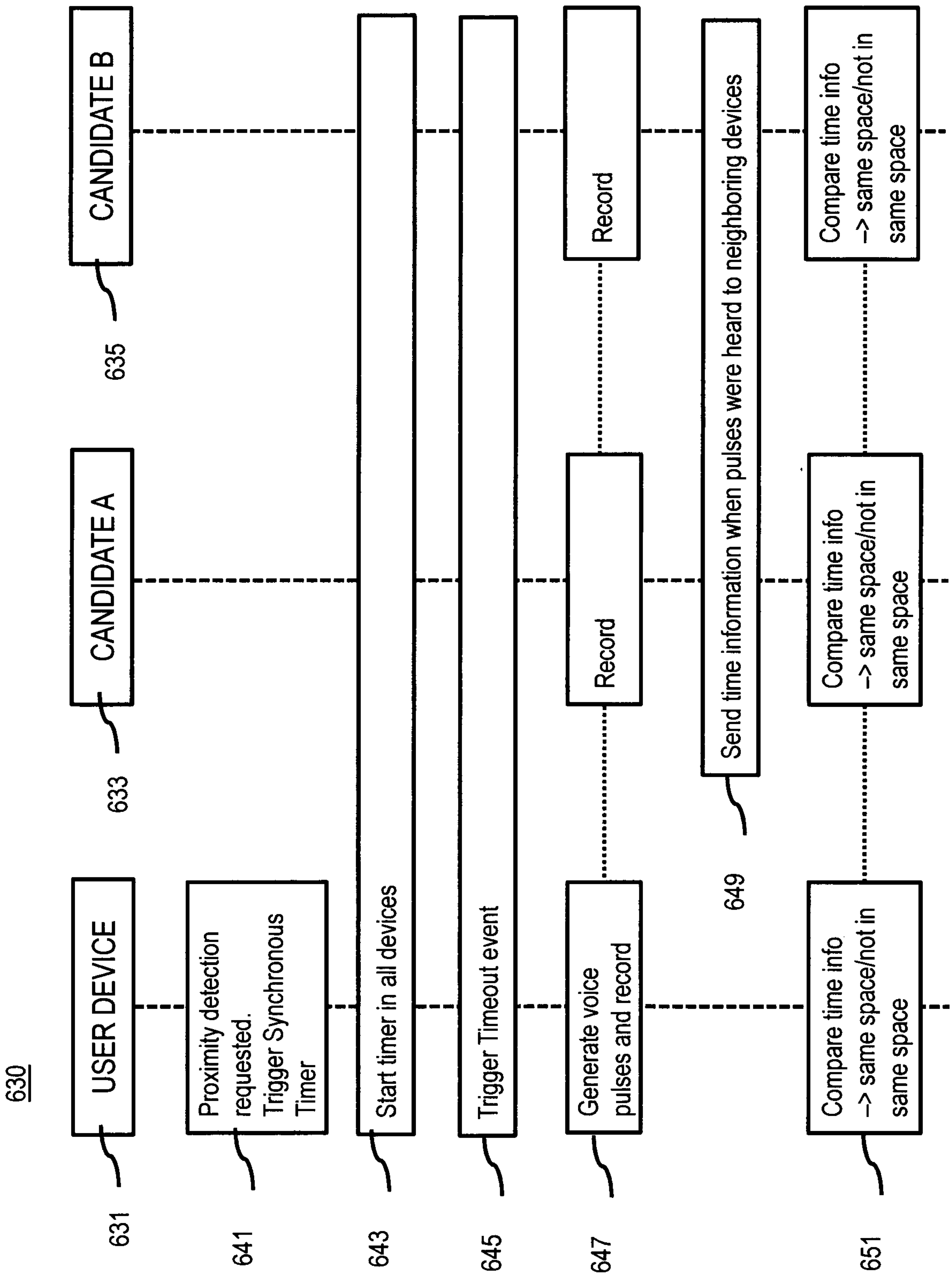
630
631
USER DEVICE
633
CANDIDATE A
635
CANDIDATE B
641
Proximity detection requested. Trigger Synchronous Timer
643
Start timer in all devices
645
Trigger Timeout event
647
Generate voice pulses and record
Record
Record
649
Send time information when pulses were heard to neighboring devices
651
Compare time info -> same space/not in same space
Compare time info -> same space/not in same space
Compare time info -> same space/not in same space

FIG. 6C

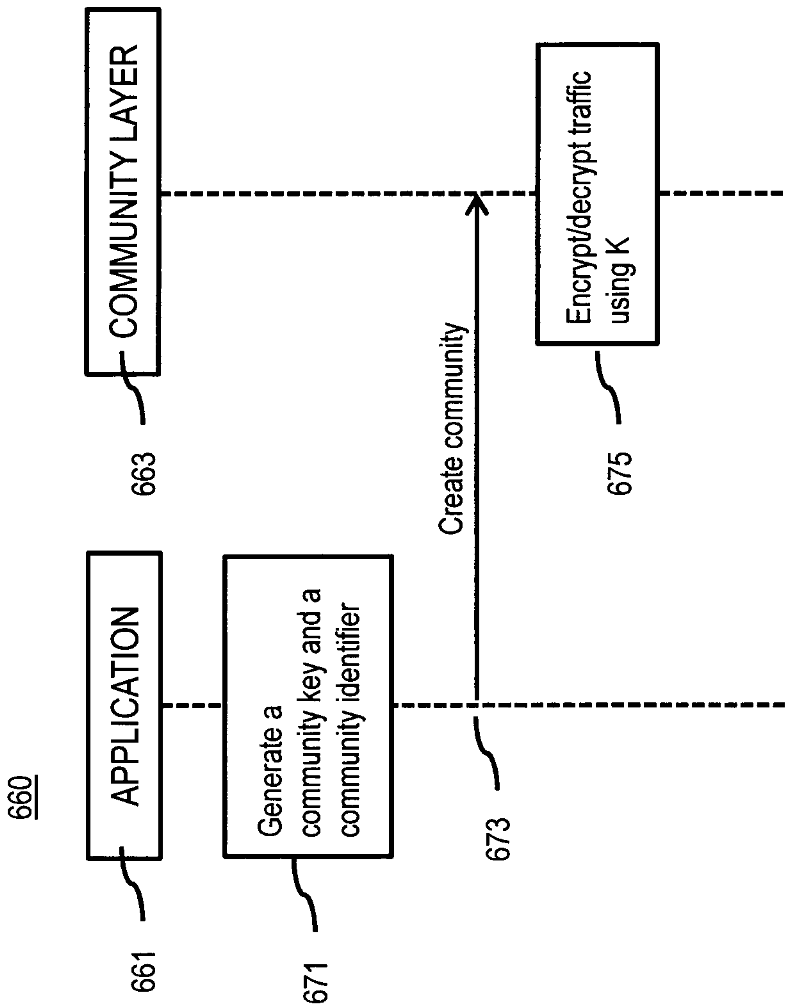
660
APPLICATION
661
COMMUNITY LAYER
663
Generate a community key and a community identifier
671
Create community
673
Encrypt/decrypt traffic using K
675

FIG. 6D

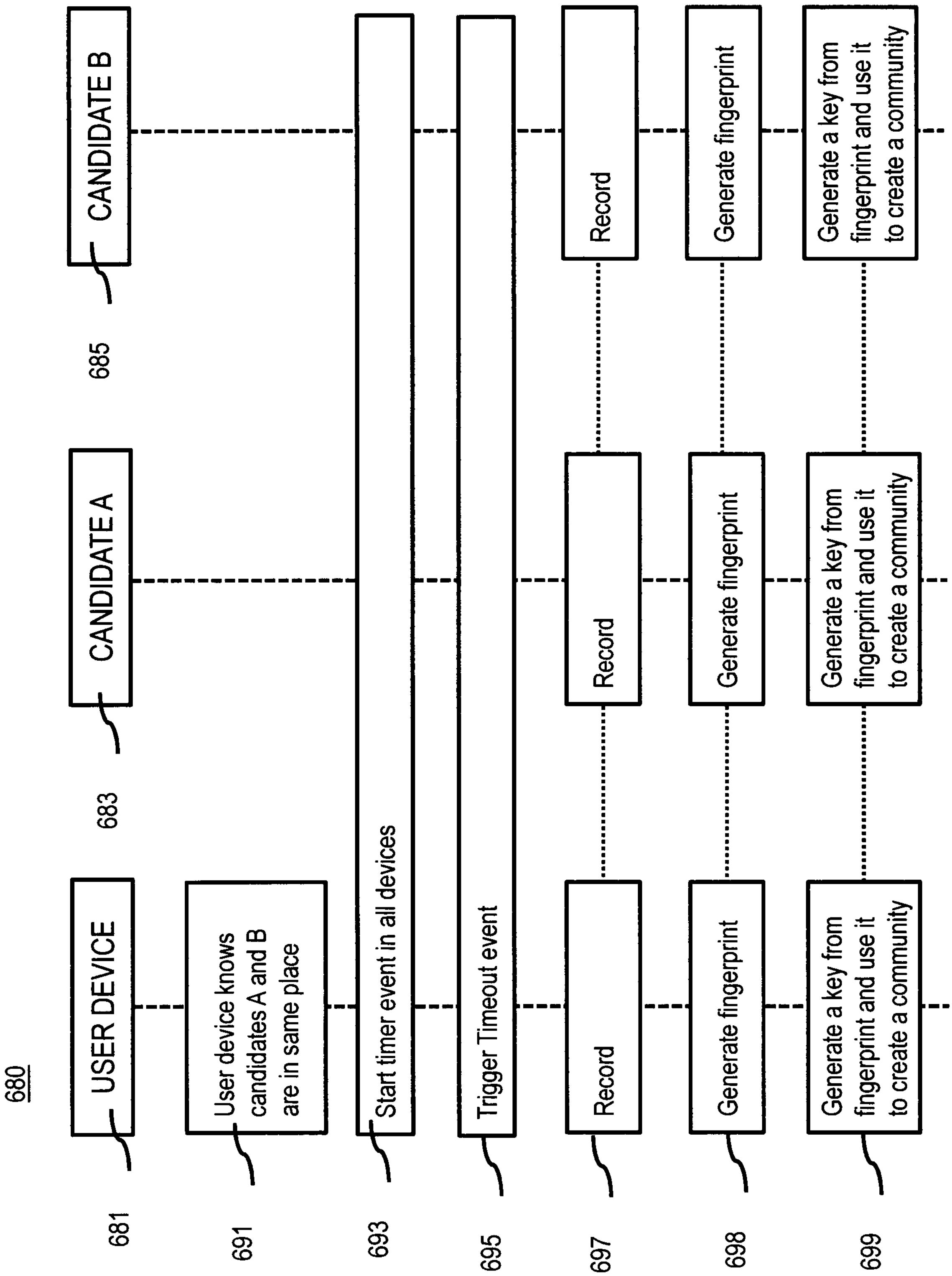
680
USER DEVICE
CANDIDATE A
CANDIDATE B
681
683
685
691
User device knows candidates A and B are in same place
693
Start timer event in all devices
695
Trigger Timeout event
697
Record
Record
Record
698
Generate fingerprint
Generate fingerprint
Generate fingerprint
699
Generate a key from fingerprint and use it to create a community
Generate a key from fingerprint and use it to create a community
Generate a key from fingerprint and use it to create a community

FIG. 7A

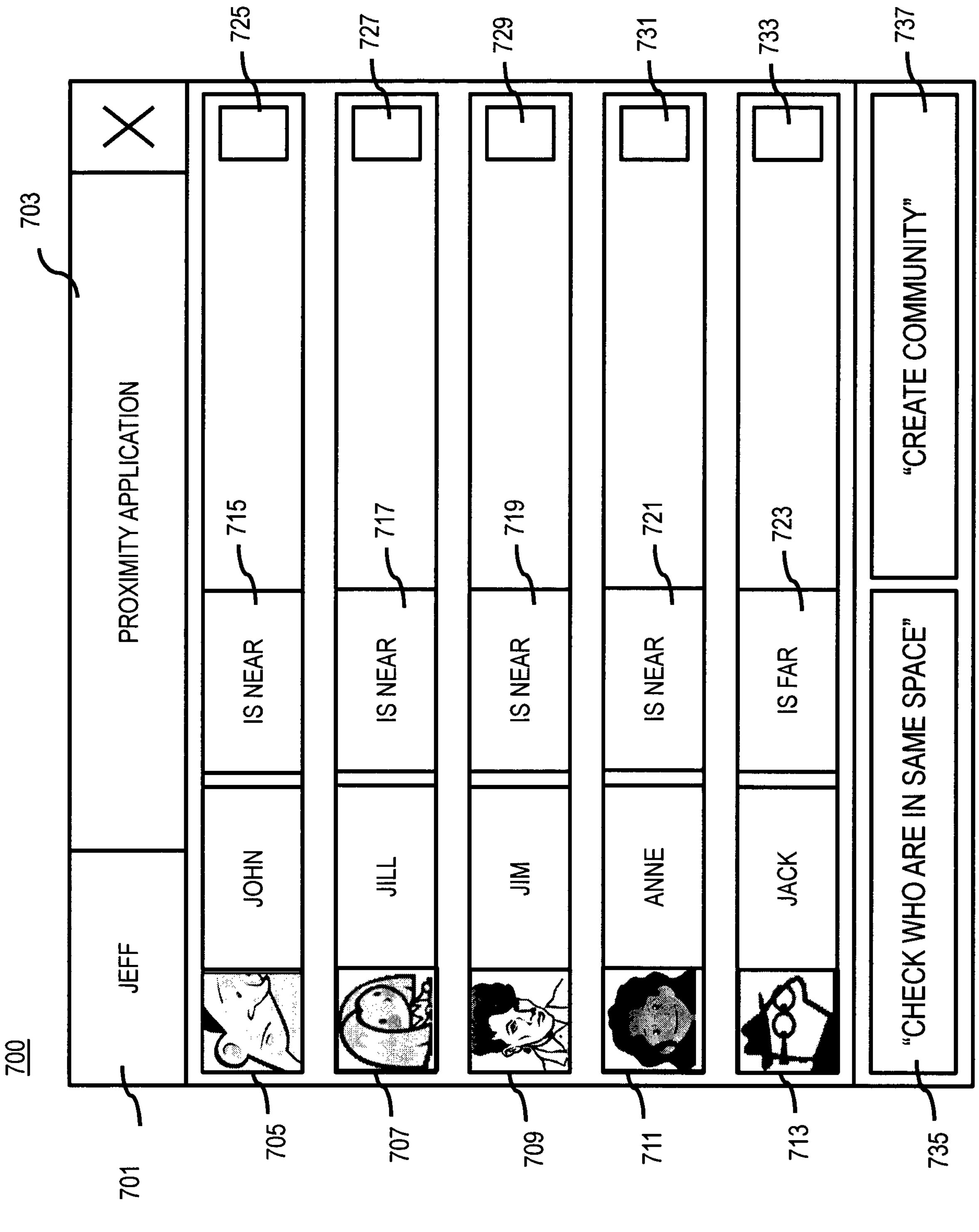
700
701
703
JEFF
PROXIMITY APPLICATION
705
JOHN
IS NEAR
715
725
707
JILL
IS NEAR
717
727
709
JIM
IS NEAR
719
729
711
ANNE
IS NEAR
721
731
713
JACK
IS FAR
723
733
735
"CHECK WHO ARE IN SAME SPACE"
"CREATE COMMUNITY"
737

FIG. 7B

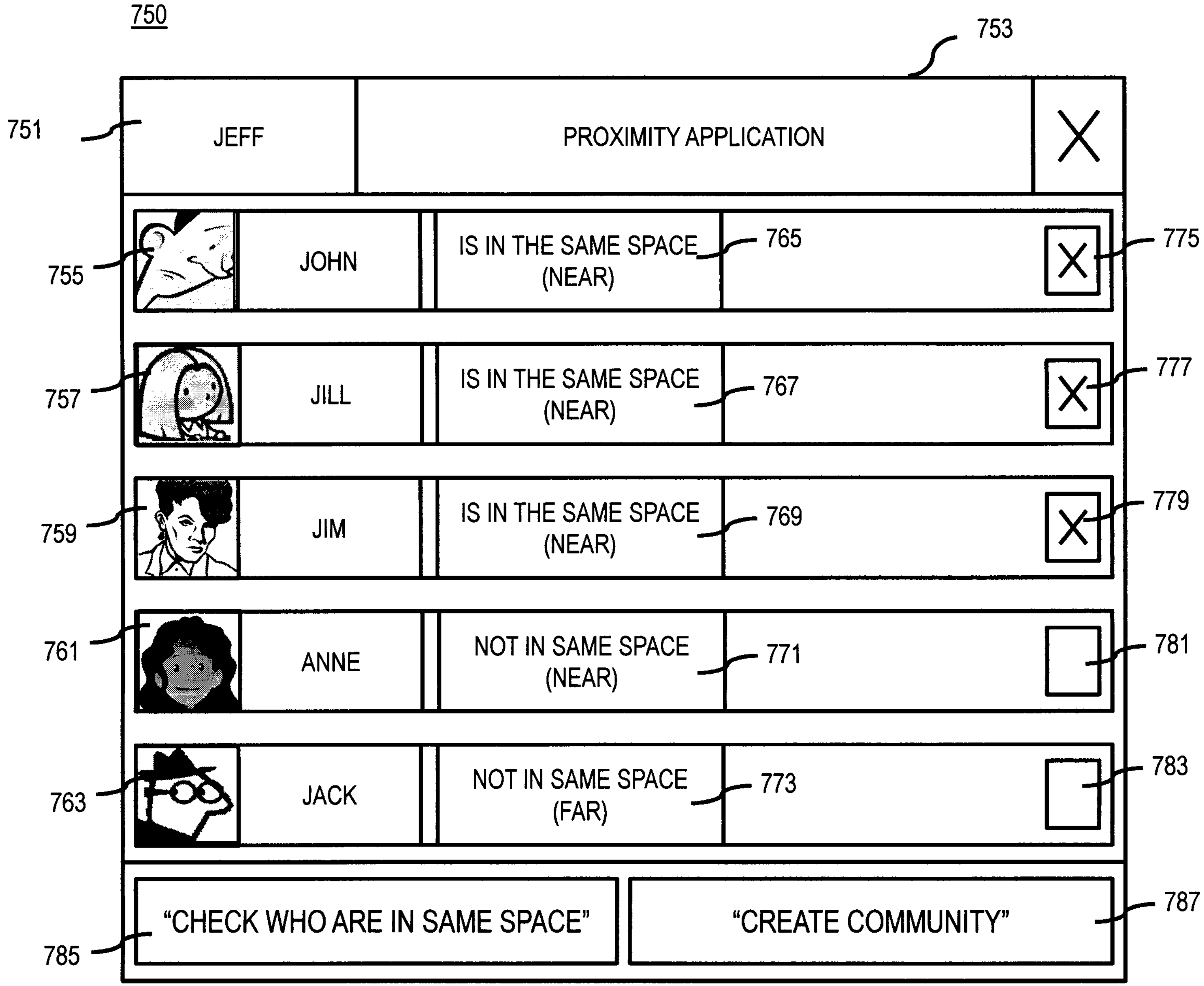
750
753
751
JEFF
PROXIMITY APPLICATION
755
JOHN
IS IN THE SAME SPACE (NEAR)
765
775
757
JILL
IS IN THE SAME SPACE (NEAR)
767
777
759
JIM
IS IN THE SAME SPACE (NEAR)
769
779
761
ANNE
NOT IN SAME SPACE (NEAR)
771
781
763
JACK
NOT IN SAME SPACE (FAR)
773
783
785
"CHECK WHO ARE IN SAME SPACE"
"CREATE COMMUNITY"
787

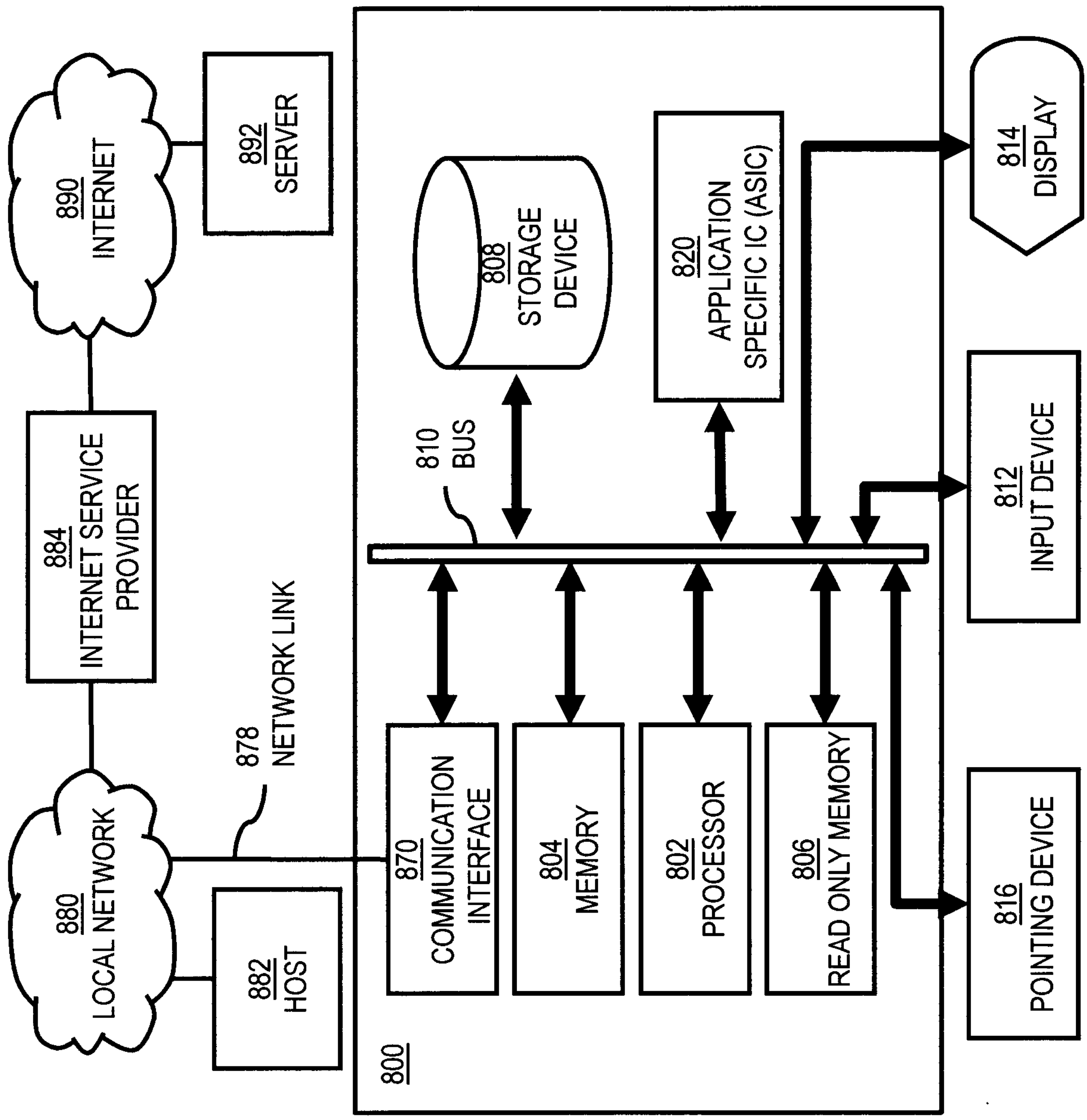
890 INTERNET
892 SERVER
884 INTERNET SERVICE PROVIDER
880 LOCAL NETWORK
882 HOST
878 NETWORK LINK
800
870 COMMUNICATION INTERFACE
804 MEMORY
802 PROCESSOR
806 READ ONLY MEMORY
810 BUS
808 STORAGE DEVICE
820 APPLICATION SPECIFIC IC (ASIC)
814 DISPLAY
812 INPUT DEVICE
816 POINTING DEVICE

FIG. 8

FIG. 9

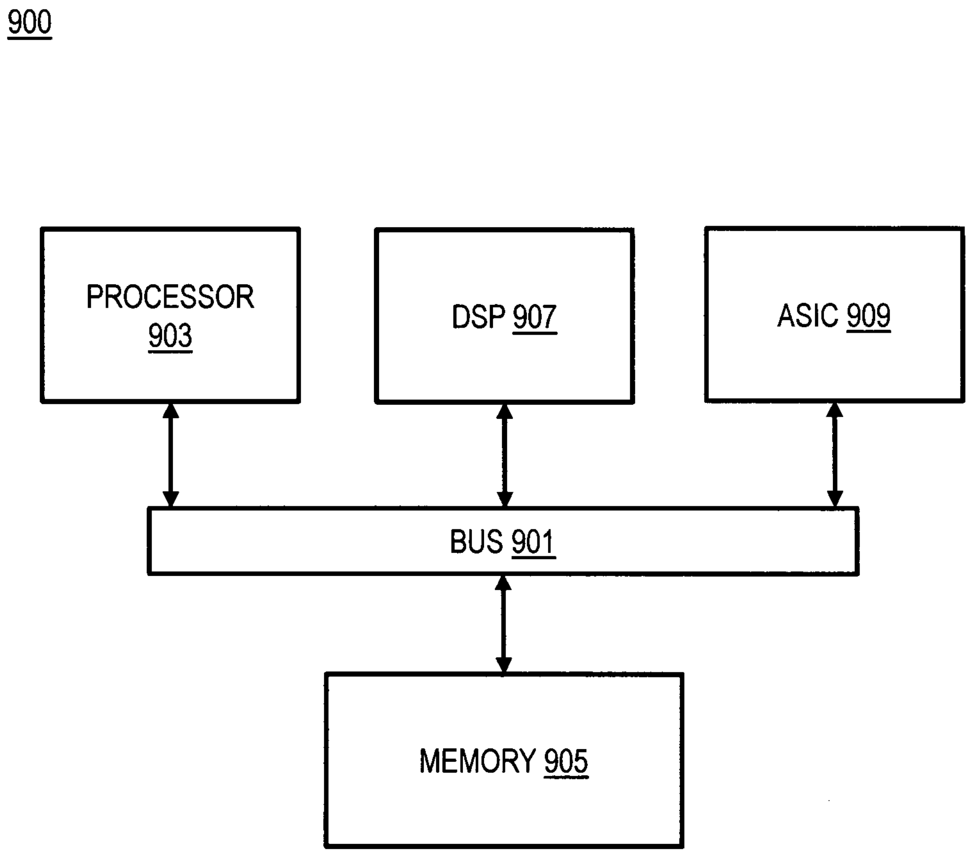

FIG. 10

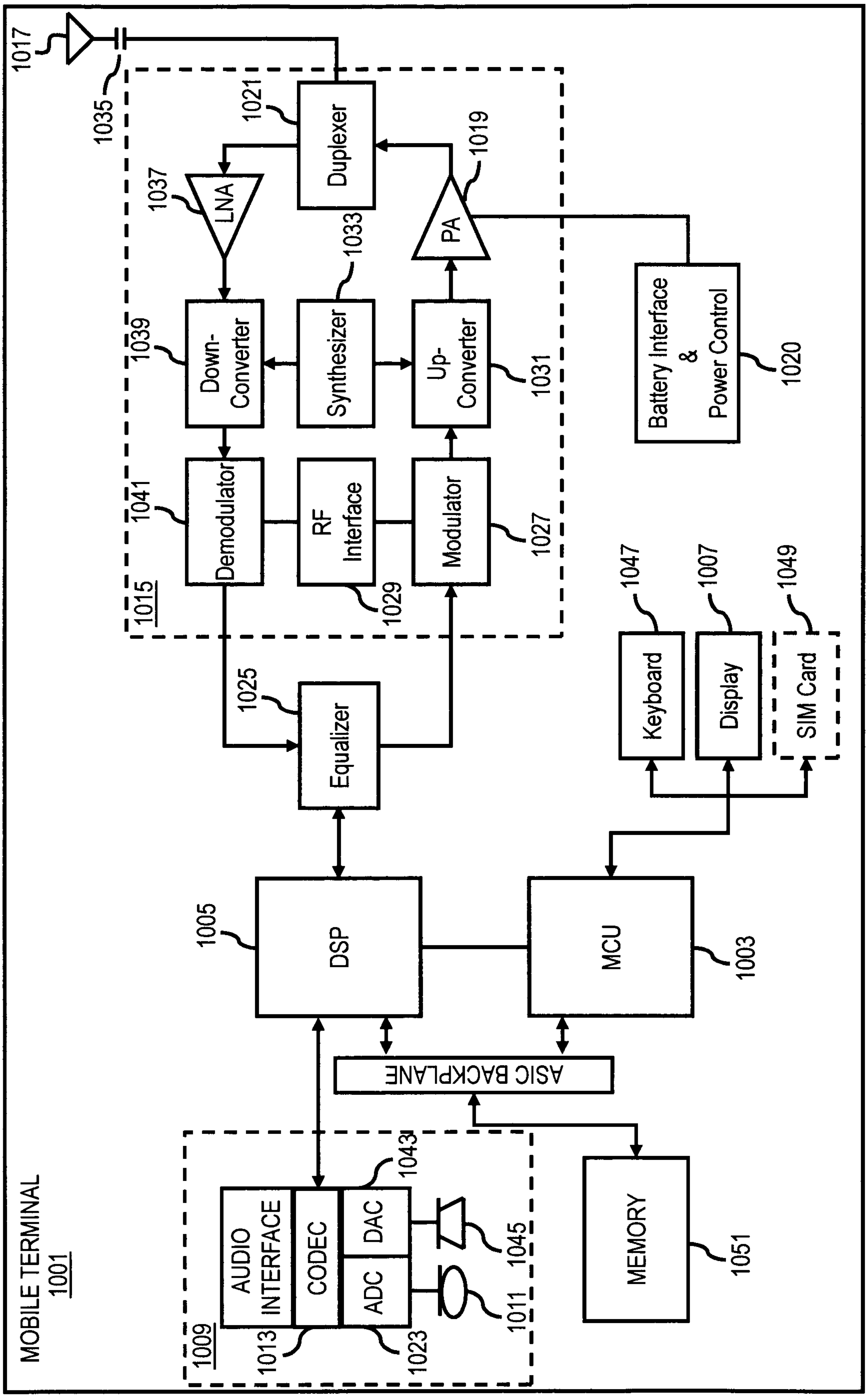
MOBILE TERMINAL
1001
1017
1035
1021
Duplexer
1037
LNA
1033
1019
PA
1039
Down-
Converter
Synthesizer
Up-
Converter
1031
Battery Interface
&
Power Control
1020
1041
Demodulator
RF
Interface
Modulator
1027
1029
1015
1025
Equalizer
1047
Keyboard
1007
Display
1049
SIM Card
1005
DSP
MCU
1003
ASIC BACKPLANE
1009
AUDIO
INTERFACE
CODEC
DAC
ADC
1043
1045
1011
1013
1023
MEMORY
1051

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009201850 A
- US 2008025330 A